(19) Europäisches Patentamt
European Patent Office
Office européen des brevets

(11) EP 4 374 953 A1

(12) EUROPEAN PATENT APPLICATION
published in accordance with Art. 153(4) EPC

(43) Date of publication:
29.05.2024 Bulletin 2024/22

(21) Application number: 22845977.2

(22) Date of filing: 21.07.2022

(51) International Patent Classification (IPC):
B01D 59/38 (2006.01)  C25B 1/16 (2006.01)
C25B 9/00 (2021.01)  C25B 9/23 (2021.01)
C25B 9/70 (2021.01)

(52) Cooperative Patent Classification (CPC):
B01D 59/38; C25B 1/16; C25B 9/00; C25B 9/23;
C25B 9/70; Y02P 10/20

(86) International application number:
PCT/JP2022/028416

(87) International publication number:
WO 2023/003044 (26.01.2023 Gazette 2023/04)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 21.07.2021 JP 2021120997

(71) Applicant: HIROSAKI UNIVERSITY
Hirosaki-shi, Aomori 036-8560 (JP)

(72) Inventors:
• SASAKI, Kazuya
  Hirosaki-shi, Aomori 036-8560 (JP)
• SHINMURA, Kiyoto
  Hirosaki-shi, Aomori 036-8560 (JP)

(74) Representative: Simmons & Simmons LLP
(Munich)
Lehel Carré
Thierschplatz 6
80538 Munich (DE)

(54) **LITHIUM ISOTOPE CONCENTRATION DEVICE, MULTI-STAGE LITHIUM ISOTOPE CONCENTRATION DEVICE, AND LITHIUM ISOTOPE CONCENTRATION METHOD**

(57) A lithium isotope concentration device 10 according to the present invention is provided with a process tank 1 which is divided into a supply tank 11 and a recovery tank 12 by means of an electrolyte membrane 2 that has lithium ion conductivity; and a main power supply 51, which is connected between electrodes 31, 32 that are provided on both surface of the electrolyte membrane 2, and a sub power supply 52, which is connected between the electrode 31 and a sub electrode 33 that is provided within the supply tank 11 at a distance from the electrolyte membrane 2, alternately apply a voltage.

FIG. 1

**Description**

**TECHNICAL FIELD**

The present invention relates to a lithium isotope enrichment device, a multi-stage lithium isotope enrichment device, and a lithium isotope enrichment method for separating a lithium isotope.

**BACKGROUND ART**

Lithium (Li) has two stable isotopes, $^7$Li and $^6$Li, and the natural abundances of these are 92.41 mol% and 7.59 mol%. The properties of $^7$Li having a mass number of 7 and $^6$Li having a mass number of 6 are largely different. For example, $^7$Li is used for adjustment of pH (concentration of hydrogen ions) of coolants of nuclear reactors. On the other hand, $^6$Li is used for production of tritiated hydrogen (tritium), which is a fuel of fusion reactors. For this reason, techniques for enriching or separating one of $^7$Li and $^6$Li into a state where the content of the other is lower have been developed. As the techniques, the amalgam method, the molten salt method, the distillation method, and the adsorption method and the electrodialysis method (for example, Patent Literature 1), which are also methods for selectively recovering lithium ions Li$^+$ from seawater, are known.

In comparison with the amalgam method, which uses a large amount of mercury, and the molten salt method and the distillation method, which heat lithium compounds and the like at high temperatures, the adsorption method and the electrodialysis method are relatively excellent from the viewpoints of environmental loads and the like. Meanwhile, these methods utilize the fact that a large amount of $^6$Li$^+$, which has a smaller mass and thus has a higher moving speed, is recovered. These methods have small isotope separation factors, and thus have low productivity as enrichment methods. Therefore, the inventors of the present invention have conducted research to utilize a lithium recovery technology (for example, Patent Literatures 2 and 3) for selectively recovering Li from seawater or the like by electrodialysis using an electrolyte membrane having lithium ion conductivity, for the purpose of enriching lithium isotopes. In such Li recovery, the inventors of the present invention have found that the isotope separation factor is large only for a short period of time immediately after the start of operation, and invented a method for enhancing the efficiency by alternately applying positive and negative voltages (Patent Literature 4, Non-Patent Literature 1).

**CITATION LIST**

**Patent Literature**

    Patent Literature 1: JP5429658
    Patent Literature 2: JP6233877
    Patent Literature 3: JP2019-141807
    Patent Literature 4: JP2019-141808

**Non-Patent Literature**

Non-Patent Literature 1: Shunsuke Honda, Kiyoto Shin-mura, Kazuya Sasaki, "Lithium isotope enrichment by electrochemical pumping using solid lithium electrolytes", Journal of the Ceramic Society of Japan, Volume 126, Issue 5, pp 331-335, May 2018

**SUMMARY OF INVENTION**

**Technical Problem**

In the methods described in Patent Literature 4 and the like, when intermittently applying a voltage, the effect may be reduced unless the application is stopped for a certain period of time or more, resulting in reduced time efficiency. When alternately applying positive and negative voltages, recovered $^6$Li$^+$ flows back when the voltage is applied in the opposite direction. To suppress this as much as possible, the voltage and application time need to be adjusted. Therefore, these methods still have room for further improvement in order to increase the productivity.

The present invention has been made in view of the above-described problems, and an object thereof is to provide a lithium isotope enrichment device, a multi-stage lithium isotope enrichment device, and a lithium isotope enrichment method which are safe and have high efficiency and productivity.

**Solution to Problem**

As a result of keen study, the inventors of the present invention have found that, in intermittent application of a voltage for electrodialysis, high effects can be obtained even when voltage application stop period is shortened, by forming a potential difference in a Li aqueous solution on the supply side (before isotope enrichment) during the period when voltage application is stopped.

Specifically, a lithium isotope enrichment device according to the present invention includes a processing tank partitioned into a first chamber and a second chamber, and is configured to recover in the second chamber from an aqueous solution containing lithium ions of $^6$Li and $^7$Li stored in the first chamber, an aqueous solution containing lithium ions having a higher isotope ratio of $^6$Li than the aqueous solution in the first chamber. The lithium isotope enrichment device according to the present invention includes: a lithium ion-conducting electrolyte membrane that partitions the processing tank; porous electrodes provided in contact with each of both surfaces of the lithium ion-conducting electrolyte membrane respectively; a sub-electrode provided in the first chamber and apart from a surface of the lithium ion-conducting electrolyte membrane closer to the first chamber and a porous electrode in the first chamber; and a power supply unit configured to apply a voltage alternately between the porous electrodes and between the porous electrode in the first chamber and the sub-electrode, with the porous electrode in the first chamber being positive. A multi-stage lithium isotope enrichment device according to the present invention includes more than or equal to two of lithium isotope enrichment devices coupled so that processing tanks are integrated together, wherein respective lithium ion-conducting electrolyte membranes of the lithium isotope enrichment devices are disposed spaced apart from each other so as to partition an integrated processing tank into more than or equal to three chambers, and the second chamber of one of two neighboring lithium isotope enrichment devices also serves as the first chamber of the other one.

A lithium isotope enrichment method according to the present invention is a method for recovering, in a processing tank partitioned into a first chamber and a second chamber by a lithium ion-conducting electrolyte membrane, in the second chamber from an aqueous solution containing lithium ions of $^6$Li and $^7$Li stored in the first chamber, an aqueous solution containing lithium ions having a higher isotope ratio of $^6$Li than the aqueous solution in the first chamber. The lithium isotope enrichment method according to the present invention includes: a first step of applying a positive voltage, with respect to a porous electrode in the second chamber, to a porous electrode in the first chamber of porous electrodes which are provided in contact with both surfaces of the lithium ion-conducting electrolyte membrane respectively and a second step of applying a negative voltage, with respect to the porous electrode in the first chamber, to a sub-electrode provided in the first chamber and apart from a surface of the lithium ion-conducting electrolyte membrane closer to the first chamber and the porous electrode in the first chamber are alternately performed.

**Advantageous Effects of Invention**

The lithium isotope enrichment device and the lithium isotope enrichment method according to the present invention make it possible to efficiently, safely, and productively recover an aqueous solution having a higher isotope ratio of $^6$Li. Furthermore, the multi-stage lithium isotope enrichment device according to the present invention can further increase the isotope ratio of $^6$Li.

**BRIEF DESCRIPTION OF DRAWINGS**

FIG. 1 is a schematic diagram showing a configuration of a lithium isotope enrichment device according to a first embodiment of the present invention.
FIG. 2 is a time chart showing changes in a voltage applied by a power supply unit of the lithium isotope enrichment device according to the first embodiment of the present invention.
FIG. 3 is a schematic diagram showing another configuration of the lithium isotope enrichment device according to the first embodiment of the present invention.
FIG. 4 is a schematic diagram of the lithium isotope enrichment device shown in FIG. 1 for explaining electrodialysis of lithium ions.
FIG. 5A is an enlarged view of a main part for explaining a behavior of lithium ions in an initial state in the electrodialysis of the lithium ions using the lithium isotope enrichment device shown in FIG. 1.
FIG. 5B is an enlarged view of the main part for explaining a behavior of the lithium ions immediately after start of movement in the electrodialysis of the lithium ions using the lithium isotope enrichment device shown in FIG. 1.
FIG. 5C is an enlarged view of the main part for explaining a behavior of the lithium ions during movement in the electrodialysis of the lithium ions using the lithium isotope enrichment device shown in FIG. 1.
FIG. 5D is an enlarged view of the main part for explaining a behavior of the lithium ions after stop of movement in the electrodialysis of the lithium ions using the lithium isotope enrichment device shown in FIG. 1.

FIG. 6 is a model for explaining ion conduction in the electrolyte.

FIG. 7 is a graph in a simulation for explaining a migration amount per hour and an isotope ratio applied voltage dependency in electrodialysis of lithium ions.

FIG. 8 is a schematic diagram showing a configuration of a lithium isotope enrichment device according to a modification of the first embodiment of the present invention.

FIG. 9 is a time chart showing changes in a voltage applied by a power supply unit of the lithium isotope enrichment device according to the modification of the first embodiment of the present invention.

FIG. 10 is a schematic diagram showing a configuration of a multi-stage lithium isotope enrichment device according to a first embodiment of the present invention.

FIG. 11A is a schematic diagram for explaining a lithium isotope enrichment method using a multi-stage lithium isotope enrichment device according to the modification of the first embodiment of the present invention.

FIG. 11B is a schematic diagram for explaining the lithium isotope enrichment method using the multi-stage lithium isotope enrichment device according to the modification of the first embodiment of the present invention.

FIG. 12 is a schematic diagram showing a configuration of a multi-stage lithium isotope enrichment device according to a second embodiment of the present invention.

FIG. 13A is a schematic diagram for explaining a lithium isotope enrichment method using the multi-stage lithium isotope enrichment device shown in FIG. 12.

FIG. 13B is a schematic diagram for explaining the lithium isotope enrichment method using the multi-stage lithium isotope enrichment device shown in FIG. 12.

FIG. 13C is a schematic diagram for explaining the lithium isotope enrichment method using the multi-stage lithium isotope enrichment device shown in FIG. 12.

FIG. 14 is a schematic diagram showing a configuration of a lithium isotope enrichment device according to a second embodiment of the present invention.

FIG. 15 is a schematic diagram of the lithium isotope enrichment device shown in FIG. 14 for explaining electrodialysis of lithium ions in the lithium isotope enrichment method.

FIG. 16 is a schematic diagram showing a configuration of a lithium isotope enrichment device according to a first modification of the second embodiment of the present invention.

FIG. 17 is a schematic diagram of the lithium isotope enrichment device shown in FIG. 16 for explaining electrodialysis of lithium ions in the lithium isotope enrichment method.

FIG. 18 is a schematic diagram showing a configuration of a lithium isotope enrichment device according to a second modification of the second embodiment of the present invention.

FIG. 19 is a schematic diagram of the lithium isotope enrichment device shown in FIG. 18 for explaining electrodialysis of lithium ions in the lithium isotope enrichment method.

FIG. 20 is a graph showing lithium ion migration amounts and isotope separation factors of lithium according to Example and Comparative Example.

## DESCRIPTION OF EMBODIMENTS

Embodiments for implementing a lithium isotope enrichment device and a lithium isotope enrichment method according to the present invention will be described with reference to the drawings. In the drawings, sizes and the like of specific components may be exaggerated and shapes may be simplified to clarify the description. In the description of each embodiment, the same components as those in the previous embodiment are denoted by the same reference numerals, and descriptions thereof will be omitted as appropriate.

[First Embodiment]

[Lithium Isotope Enrichment Device]

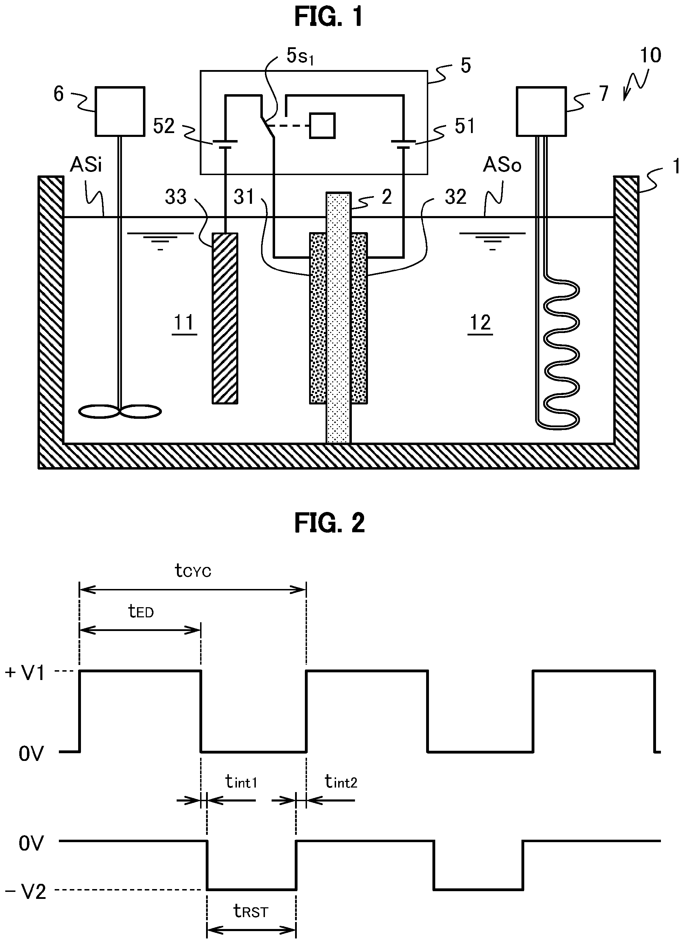

As shown in FIG. 1, a lithium isotope enrichment device 10 according to a first embodiment of the present invention includes a processing tank 1, an electrolyte membrane (lithium ion-conducting electrolyte membrane) 2, a first electrode 31 and a second electrode 32 (porous electrodes) applied to the respective surfaces of the electrolyte membrane 2, a third electrode (sub-electrode) 33, a power supply unit 5, a stirring device (circulator means) 6, and a cooling device 7. The processing tank 1 is partitioned by the electrolyte membrane 2 into a supply chamber (first chamber) 11 which holds a Li-containing aqueous solution ASi and a recovery chamber (second chamber) 12 which holds a $^6$Li recovery aqueous solution ASo. The third electrode 33 is provided spaced apart from the electrolyte membrane 2 in the supply chamber 11. The power supply unit 5 includes a main power supply 51 and a sub-power supply 52, each of which is a direct current power supply, and also includes a switching element $5s_1$. The main power supply 51 and the sub-power supply 52 alternately apply voltages by switching the switching element 5s1. The main power supply 51 has a positive (+) electrode connected to the first electrode 31 provided in the supply chamber 11, and a negative (-) electrode connected to the second electrode 32 provided in the recovery chamber 12. The sub-power supply 52 has a positive electrode connected to the first electrode 31, and a negative electrode connected to the third electrode 33. The stirring device 6 circulates the Li-containing aqueous solution ASi in the supply chamber 11. The cooling device 7 cools the electrolyte membrane 2 through the $^6$Li recovery aqueous solution ASo in the recovery chamber 12. Hereinafter, the components included in the lithium isotope enrichment device according to the first embodiment of the present invention will be described.

The processing tank 1 is made of a material that does not undergo deterioration such as corrosion even when coming into contact with the Li-containing aqueous solution ASi and the $^6$Li recovery aqueous solution ASo. The processing tank 1 only needs to have a volume corresponding to required processing capacity, and its shape and the like are not particularly limited.

The electrolyte membrane 2 is an electrolyte having lithium-ion conductivity, and preferably does not conduct electrons e-. In a case where the Li-containing aqueous solution ASi contains metal ions other than Li+, the electrolyte membrane 2 preferably does not conduct these metal ions. The electrolyte membrane 2 is more preferably an electrolyte made of ceramics having these properties, specifically, lithium lanthanum titanium oxide ($La_{2/3-x} Li_{3x}TiO_3$, also referred to as LLTO) or the like. Such an electrolyte membrane 2 has a certain proportion of lattice defects. Since the size of the lattice defect site is small, the electrolyte membrane 2 does not conduct metal ions having diameters larger than that of $Li^+$. For example, a solid electrolyte having a perovskite (ABOs) structure (A=Li, La, or a void, B=Ti) such as LLTO has voids in some sites (A site defects). As described in terms of a lithium isotope enrichment method to be described later, $Li^+$ gets into the A site defects, and $Li^+$ migrates between the A site defects in the vicinity. Hereinafter, a site where Li can be present such as the A site is referred to as a Li site, and a Li site having voids is referred to as a Li site defect.

The first electrode 31 and the second electrode 32 are electrodes paired up with each other to apply a voltage between both surfaces of the electrolyte membrane 2. The first electrode 31 is provided in contact with the surface of the electrolyte membrane 2 closer to the supply chamber 11 (hereinafter referred to as a front surface of the electrolyte membrane 2, as appropriate). The second electrode 32 is provided in contact with the surface of the electrolyte membrane 2 closer to the recovery chamber 12 (hereinafter referred to as a back surface of the electrolyte membrane 2, as appropriate). The first electrode 31 and the second electrode 32 apply a voltage to a wide area of the electrolyte membrane 2 and each have a net-like porous structure that allows the aqueous solutions ASi and ASo to come into contact with a sufficient area of each surface of the electrolyte membrane 2.

The first electrode 31 is formed of an electrode material that has electron conductivity and is stable even when a voltage is applied in the Li-containing aqueous solution Asi, and that also preferably has catalytic activity for the reaction of Formula (1) below and the reaction of Formula (2) below. The second electrode 32 is formed of an electrode material that has electron conductivity and is stable during the application of a voltage even in the $^6$Li recovery aqueous solution ASo that has contained Li+ in the course of the reaction, and that also preferably has catalytic activity for the reaction of Formula (3) below and the reaction of Formula (4) below. The electrode material for the first electrode 31 and the second electrode 32 is more preferably a material that can be easily processed into the shape described above. The first electrode 31 and the second electrode 32 are each preferably made of platinum (Pt), for example. In each formula, $Li^+$ contained in the electrolyte membrane 2 (electrolyte) is expressed as $Li^+$ (electrolyte). Formula (2) below shows a reaction where $Li^+$ in the aqueous solution (Li-containing aqueous solution ASi) migrates into the electrolyte membrane 2. Formula (4) below shows a reaction where $Li^+$ in the electrolyte membrane 2 migrates into the aqueous solution ($^6$Li recovery aqueous solution ASo).

[Chem. 1]

$$2OH^- \rightarrow H_2O + \frac{1}{2}O_2 \uparrow + 2e^- \quad \cdots (1)$$

$$Li^+ \rightarrow Li^+(electrolyte) \qquad \cdots (2)$$

$$2H_2O + 2e^- \rightarrow 2OH^- + H_2 \uparrow \cdots (3)$$

$$Li^+(electrolyte) \rightarrow Li^+ \qquad \cdots (4)$$

The third electrode 33 is an electrode for forming a lower potential than the surface of the electrolyte membrane 2 in the Li-containing aqueous solution ASi. Therefore, the third electrode 33 is disposed in the supply chamber 11 so as not to contact the electrolyte membrane 2 and the first electrode 31, and is preferably disposed parallel to the first electrode 31. Further, in order to suppress a voltage V2 applied between the third electrode 33 and the first electrode 31, the third electrode 33 is preferably disposed close to the first electrode 31 to the extent to avoid short-circuiting with it, as will be described later. The third electrode 33 preferably has a mesh-like shape through which the aqueous solution can pass, so as to increase the contact area with the Li-containing aqueous solution ASi and so that the Li-containing aqueous solution ASi in contact with the surface of the electrolyte membrane 2 (first electrode 31) in the supply chamber 11 is continuously replaced. As with the first electrode 31, the third electrode 33 is formed of an electrode material that is stable even when a voltage is applied in the Li-containing aqueous solution ASi, and that preferably can be easily processed into the shape described above. For the third electrode 33, platinum (Pt) is preferably used as such an electrode material, for example, or carbon (C) can also be used.

The power supply unit 5 includes the two DC power supplies 51 and 52, and also includes the switching element $5s_1$ and its drive circuit or the like. The power supply unit 5 alternately applies DC voltages from each of the power supplies 51 and 52. The main power supply 51 has a positive electrode connected to the first electrode 31 and a negative electrode connected to the second electrode 32. The main power supply 51 applies a positive voltage V1 (voltage +V1), with respect to the second electrode 32, to the first electrode 31. The sub-power supply 52 has a positive electrode connected to the first electrode 31 and a negative electrode connected to the third electrode 33. The sub-power supply 52 applies a negative voltage V2 (voltage -V2), with respect to the first electrode 31, to the third electrode 33. The voltage V2 is applied while the voltage +V1 is not applied by the main power supply 51 as shown in FIG. 2. For this purpose, the switching element $5s_1$ is configured to connect the first electrode 31 to either the positive electrode of the main power supply 51 or the positive electrode of the sub-power supply 52, or not to connect it to either of them. In other words, the power supply unit 5 includes two DC pulse power supplies that are synchronized with each other. The power supplies 51 and 52 each preferably have a built-in capacitor or the like to have high time responsiveness so as to ideally output a rectangular wave as shown in FIG. 2. Although the magnitudes of the voltages V1 and V2 and the application timing thereof will be described in detail later, it is preferable that the voltage V2 is smaller than the voltage V1.

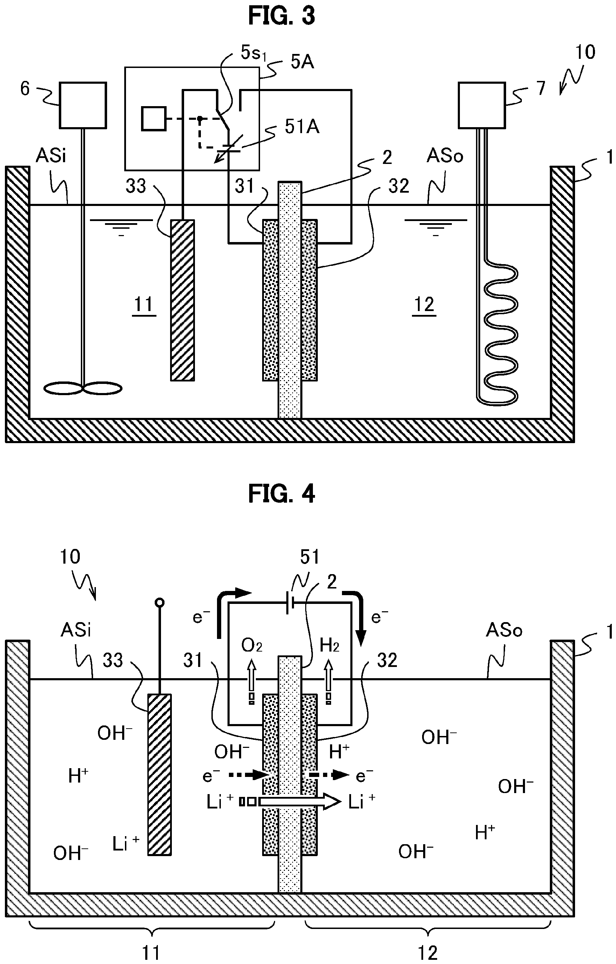

The power supply unit 5 only needs to be able to alternately apply the voltages V1 and V2 of predetermined polarities and magnitudes between the first electrode 31 and the second electrode 32 and between the third electrode 33 and the first electrode 31, respectively. The circuit configuration shown in FIG. 1 is just an example. For example, as shown in FIG. 3, a power supply unit 5A may be provided, including a variable power supply 51A that can be switched between two levels of voltages V1 and V2, and the switching element 5s1 that switches a connection destination of its negative electrode. Alternatively, the power supply unit 5 may have a configuration (not shown) including two DC power supplies connected in series via a switching element, both of which apply the voltage V1 and one of which applies the voltage V2. In the lithium isotope enrichment device 10 shown in FIGs. 1 and 3, the third electrode 33 is in an open state (see FIG. 4) during the application of the voltage V1 between the first electrode 31 and the second electrode 32 by the power supply unit 5 or 5A, while the second electrode 32 is in an open state during the application of the voltage V2 between the third electrode 33 and the first electrode 31. Alternatively, the third electrode 33 may be configured to be connected to the same potential as the first electrode 31 during the application of the voltage +V1 between the first electrode 31 and the second electrode 32 by the power supply unit 5 or 5A. Still alternatively, the second electrode 32 may be configured to be connected to the same potential as the first electrode 31 during the application of the voltage -V2 between the third electrode 33 and the first electrode 31.

The stirring device 6 is a device provided as necessary to circulate the Li-containing aqueous solution ASi in the supply chamber 11 so that the Li-containing aqueous solution ASi in contact with the first electrode 31 is continuously replaced during operation. The stirring device 6 can be a known device that may have a screw rotated or have a pump to circulate the Li-containing aqueous solution ASi to the outside of the processing tank 1. The lithium isotope enrichment device 10 may also include the stirring device 6 in the recovery chamber 12 to circulate the $^6$Li recovery aqueous solution ASo.

The cooling device 7 is provided as necessary to bring the electrolyte membrane 2 to a predetermined temperature, and cools the electrolyte membrane 2 through the Li-containing aqueous solution ASi or the $^6$Li recovery aqueous solution ASo. The cooling device 7 can be a known device that cools a liquid, and preferably has a temperature adjustment function. In this embodiment, the cooling device 7 is of a throw-in type (immersion type) and has a pipe (coolant pipe), through which a coolant circulates, immersed and set in the $^6$Li recovery aqueous solution ASo in the recovery chamber 12. The cooling device 7 only needs to be able to bring the electrolyte membrane 2 to a predetermined temperature, and does not need to keep the Li-containing aqueous solution ASi or the $^6$Li recovery aqueous solution ASo at a uniform temperature. However, depending on the volume of the processing tank 1 and the like, a stirring device may be provided. The coolant pipe of the cooling device 7 is made of a material that does not undergo deterioration such as corrosion even when coming into contact with the Li-containing aqueous solution ASi or the $^6$Li recovery aqueous solution Aso, as with the processing tank 1, and the shape and the like are not particularly limited. For example, in order to efficiently cool the electrolyte membrane 2, the coolant pipe is set in such a manner as to meander in plane in conformity to the dimensions of the plate-like electrolyte membrane 2 and face a wide area of the electrolyte membrane 2 in the vicinity. Such coolant pipes may be installed in both of the supply chamber 11 and the recovery chamber 12, depending on the thickness of the electrolyte membrane 2 or the like. The cooling device 7 may be configured such that the coolant is circulated in the inside (jacket portion) of a double structure (jacket tank) of the processing tank 1. Alternatively, it is also possible to employ a configuration in which the Li-containing aqueous solution ASi or the $^6$Li recovery aqueous solution ASo is circulated to the outside of the processing tank 1 with a pump and cooled by a heat exchanger.

The temperature of the electrolyte membrane 2, which will be described in detail later, is 30 °C or lower and is 0 °C or higher when the $^6$Li recovery aqueous solution ASo is pure water, for example, at the start of operation of the lithium isotope enrichment device 10 (start of electrodialysis), to prevent the aqueous solutions ASi and ASo from freezing. As for the temperature of the electrolyte membrane 2, the liquid temperature of the Li-containing aqueous solution ASi or the $^6$Li recovery aqueous solution ASo can be measured alternatively.

The Li-containing aqueous solution ASi is a Li source, which is an aqueous solution containing cations $^7$Li$^+$ and $^6$Li$^+$ of $^7$Li and $^6$Li. The Li-containing aqueous solution ASi is, for example, an aqueous solution of lithium hydroxide (LiOH), and contains $^7$Li$^+$ and $^6$Li$^+$ at a natural abundance at the start of the operation of the lithium isotope enrichment device 10. The Li-containing aqueous solution ASi preferably has a higher Li$^+$ concentration, and more preferably is a saturated aqueous solution or a supersaturated aqueous solution of Li$^+$ at the start of the operation of the lithium isotope enrichment device 10. The $^6$Li recovery aqueous solution ASo is an aqueous solution for holding more lithium ions Li$^+$, particularly $^6$Li$^+$, recovered from the Li-containing aqueous solution ASi, and is pure water, for example, at the start of the operation of the lithium isotope enrichment device 10. In the present specification, $^7$Li and $^6$Li ($^7$Li$^+$ and $^6$Li$^+$) are collectively referred to as Li (Li$^+$) unless otherwise distinguished from each other.

The lithium isotope enrichment device 10 may further include a liquid level sensor or the like to sense changes in the amounts of the Li-containing aqueous solution ASi and the $^6$Li recovery aqueous solution ASo during operation. In order to prevent carbon dioxide ($CO_2$) in the atmosphere from unintentionally dissolving into the aqueous solutions Asi and Aso, leading to the precipitation of lithium carbonate ($Li_2CO_3$), the lithium isotope enrichment device 10 is preferably configured such that the Li-containing aqueous solution ASi and the $^6$Li recovery aqueous solution Aso are not exposed to the atmosphere. For safety purposes, the lithium isotope enrichment device 10 preferably further includes exhaust means for exhausting $H_2$ and $O_2$ generated during operation (due to the reactions of Formulas (1) and (3)) so as not to fill the inside.

[Lithium Isotope Enrichment Method]

In a lithium isotope enrichment method according to the embodiment of the present invention, a first step of applying the positive voltage V1 to the first electrode 31 provided on the front surface of the electrolyte membrane 2 with respect to the second electrode 32 provided on the back surface and a second step of applying the negative voltage V2, with respect to the first electrode 31, to the third electrode 33 are performed alternately. First, electrodialysis of lithium ions by using the lithium isotope enrichment device according to the first embodiment will be described with reference to FIG. 4. In the lithium isotope enrichment device 10 shown in FIG. 4, the stirring device 6 and the cooling device 7 are omitted.

As shown in FIG. 4, in the lithium isotope enrichment device 10, the main power supply 51 of the power supply unit 5 applies the positive voltage V1 (voltage +V1) to the first electrode 31 relative to the second electrode 32. Then, in the vicinity of the first electrode 31, hydroxide ions (OH$^-$) in the Li-containing aqueous solution ASi cause the reaction of Formula (1) below, releasing electrons e- to the first electrode 31, where water ($H_2O$) and oxygen ($O_2$) are generated. In the Li-containing aqueous solution ASi, as OH$^-$ decreases, the reaction of Formula (2) below, where Li$^+$ in the Li-containing aqueous solution ASi migrates into the electrolyte membrane 2, occurs near the electrolyte membrane 2 to maintain the charge balance. The reactions of Formula (1) and Formula (2) below put together cause the reaction of Formula (5) below to occur near the first electrode 31. Meanwhile, in the vicinity of the second electrode 32, $H_2O$ in the $^6$Li recovery aqueous solution ASo is supplied with electrons e$^-$, causing the reaction of Formula (3) below to generate hydrogen ($H_2$) and OH$^-$. In the $^6$Li recovery aqueous solution ASo, as OH$^-$ increases, the reaction of Formula (4) below, which causes Li$^+$ in the electrolyte membrane 2 to migrate, occurs near the electrolyte membrane 2 to maintain the charge balance. The reactions of Formula (3) and Formula (4) below put together cause the reaction of Formula (6) below to occur near the second electrode 32.

[Chem. 2]

$$2OH^- \rightarrow H_2O + \frac{1}{2}O_2 \uparrow + 2e^- \quad \cdots (1)$$

$$Li^+ \rightarrow Li^+(electrolyte) \quad \cdots (2)$$

$$2Li^+ + 2OH^- \rightarrow 2Li^+(electrolyte) + H_2O + \frac{1}{2}O_2 \uparrow + 2e^- \quad \cdots (5)$$

$$2H_2O + 2e^- \rightarrow 2OH^- + H_2 \uparrow \quad \cdots (3)$$

$$Li^+(electrolyte) \rightarrow Li^+ \quad \cdots (4)$$

$$2Li^+(electrolyte) + 2H_2O + 2e^- \rightarrow 2OH^- + H_2 \uparrow + 2Li^+ \quad \cdots (6)$$

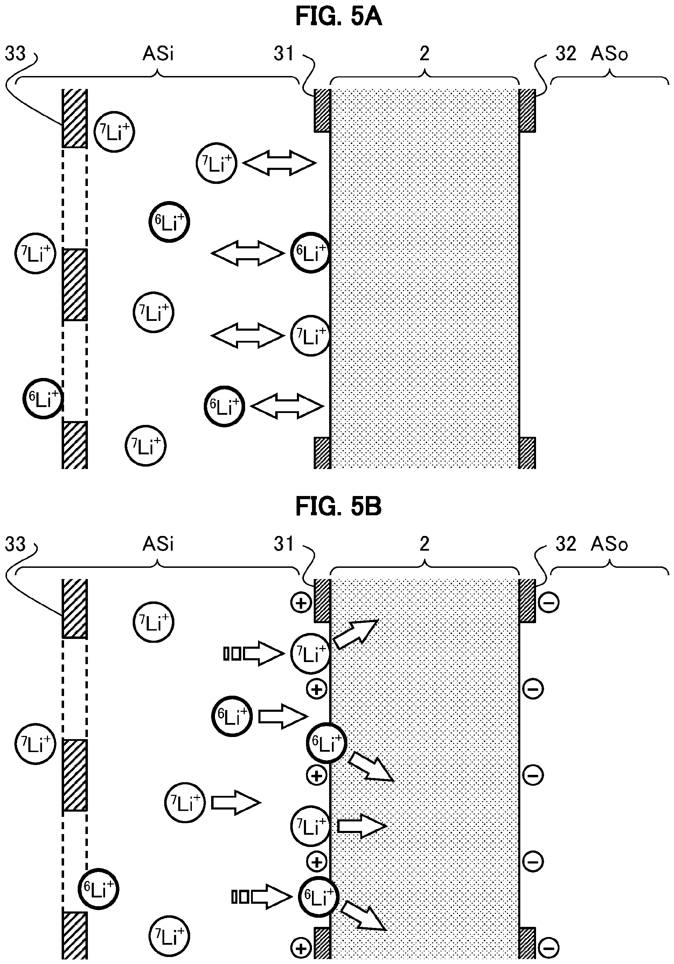

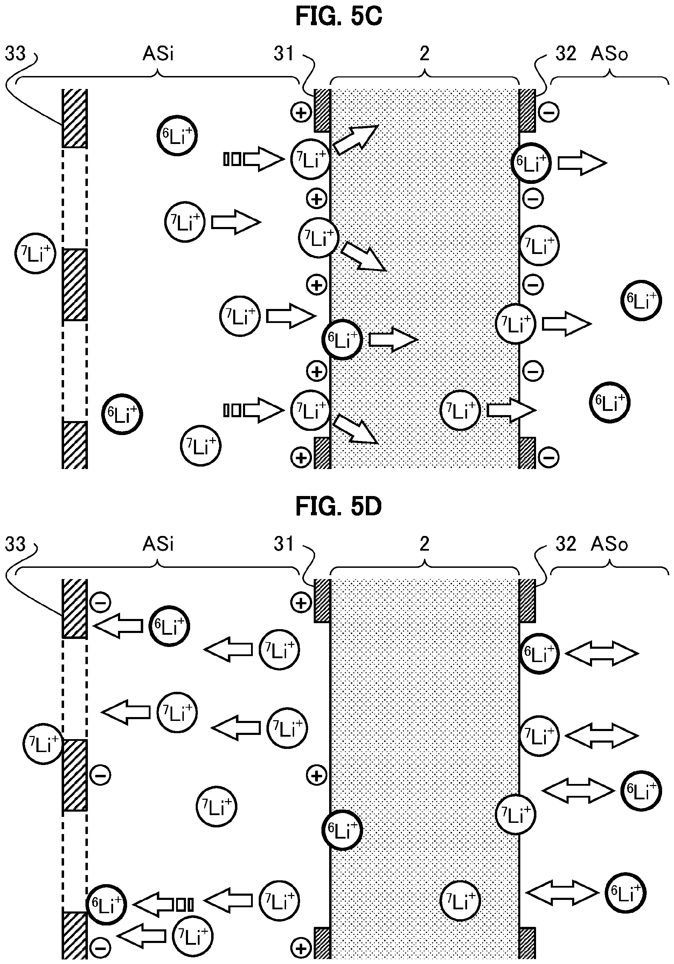

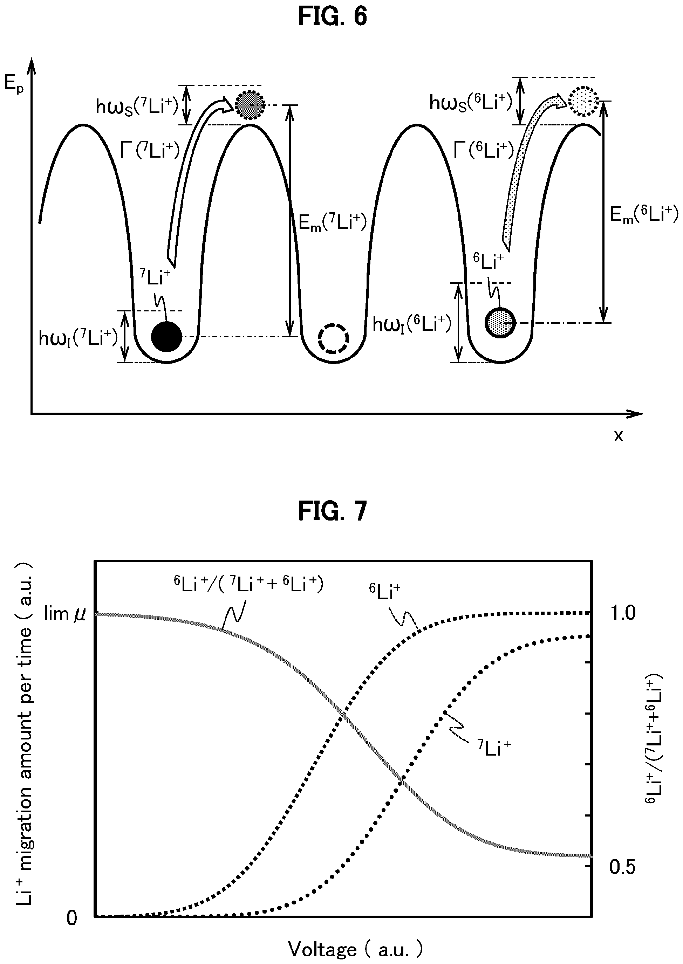

Once these reactions occur, $Li^+$ in the Li-containing aqueous solution ASi, the electrolyte membrane 2 (electrolyte), and the $^6Li$ recovery aqueous solution ASo passes through the electrolyte membrane 2 and migrates into the $^6Li$ recovery aqueous solution Aso from the Li-containing aqueous solution ASi due to differences in electrochemical potential of $Li^+$. These reactions become faster as more electrons $e^-$ migrate per hour from the Li-containing aqueous solution ASi to the first electrode 31 and from the second electrode 32 to the $^6Li$ recovery aqueous solution ASo. Therefore, the larger the voltage V1, the larger the $Li^+$ migration amount per hour (mobility) from the first electrode 31 side to the second electrode 32 side in the electrolyte membrane 2. However, in practice, as the voltage +V increases to a certain level or more, the electrolyte membrane 2 starts conducting electrons $e^-$ as well. For this reason, although the mobility of $Li^+$ continues to increase, the voltage dependency decreases. Here, a behavior when $Li^+$ passes through the electrolyte membrane 2 will be described in detail with reference to FIGs. 5A to 5C. FIGs. 5A to 5C are each an enlarged cross-sectional view of the vicinity of the electrolyte membrane 2 in the lithium isotope enrichment device 10. The electrodes 31 and 32 are partially in contact with the respective surfaces of the electrolyte membrane 2. As for the aqueous solutions Asi and Aso, only $^7Li^+$ and $^6Li^+$ contained therein are circled and shown.
When no voltage is applied, as shown in FIG. 5A, $^7Li^+$ and $^6Li^+$ float in the Li-containing aqueous solution ASi and alternately repeat adsorption and desorption into and from the front surface of the electrolyte membrane 2. From this state, as shown in FIG. 5B, a positive voltage V1 (voltage +V1) is applied to the first electrode 31 and a negative voltage is applied to the second electrode 32. In the drawings, positive charges are represented by the circled + and negative charges are represented by the circled -. Then, $Li^+$ ($^7Li^+$ and $^6Li^+$) in the Li-containing aqueous solution ASi starts dissolving in the electrolyte membrane 2 as the reaction of Formula (2) above. In this event, $Li^+$ adsorbed near the Li site defect in the front surface of the electrolyte membrane 2 gets into this Li site defect. Then, since the electrolyte membrane 2 has a potential gradient in which the potential is lower on the back surface than on the front surface due to the electrodes 31 and 32, $Li^+$ which has gotten into the Li site defect of the front surface jumps (hops) to a Li site defect in the vicinity on the deeper side of the electrolyte membrane 2. $Li^+$ repeatedly migrates from a Li site defect to another Li site defect nearby in the electrolyte membrane 2. Eventually, $Li^+$ migrates from the Li site defect on the back surface into the $^6Li$ recovery aqueous solution ASo as the reaction of Formula (4) above, as shown in FIG. 5C.
On the front surface of the electrolyte membrane 2, since $Li^+$ adsorbed near a Li site defect has migrated deeper into the electrolyte membrane 2, other $Li^+$ adsorbed nearby migrates and gets into the emptied Li site defect, or new $Li^+$ is adsorbed from inside the Li-containing aqueous solution ASi, and these $Li^+$ similarly migrate in the electrolyte membrane 2. Moreover, the migration of $Li^+$ in the electrolyte membrane 2 fills a Li site defect with $Li^+$ or empties the Li site defect again. This enables Li+ adsorbed on the front surface to start migrating to the back surface side through Li site defects newly generated in the front surface of the electrolyte membrane 2.
The $Li^+$ migration (hopping) between sites in the electrolyte membrane 2 will be described in more detail with reference to FIG. 6. FIG. 6 is a model for explaining ion conduction in an electrolyte, where x represents a position in the thickness direction of the electrolyte membrane 2 and $E_p$ represents potential energy. In the electrolyte membrane 2, $Li^+$ ($^7Li^+$ and $^6Li^+$) is stable in a Li site where the potential energy is at its minimum. When a nearby Li site is void (represented by a dashed circle) and $Li^+$ receives energy larger than or equal to an activation energy $E_a$, $Li^+$ can jump (hop) across an energy barrier $E_m$ between the sites and migrate to this site defect ($E_a = E_D/2 + E_m$, $E_D$: defect formation energy). In addition, it can be assumed that ions are thermally vibrating at a frequency $\Gamma_0$ at a position with the minimum potential energy, and ions can hop at a frequency (hopping rate $\Gamma$) corresponding to this frequency (frequency factor) $\Gamma_0$. The frequency $\Gamma_0$ is in inverse proportion to the square root of mass of ions. $^6Li$ has a small mass that is 6/7 times that of $^7Li$, and thus the frequency $\Gamma_0$ is ($\sqrt{(7/6)}$) times that of $^7Li$. Accordingly, the average migration speed of $^6Li$ in the

electrolyte membrane 2 is ($\sqrt{(7/6)}$) times faster than that of $^7$Li, which will be described in detail later. For example, in a case where $^7$Li$^+$ and $^6$Li$^+$ are present at two positions in the vicinity of and equidistant from a certain Li site defect in the electrolyte membrane 2, it is surmised that $^6$Li$^+$ preferentially jumps to the Li site defect.

In addition, $^7$Li$^+$ and $^6$Li$^+$ in a Li site of the electrolyte membrane 2, that is, in the ground state, have potential energies higher by the zero-point vibration $h\omega_l$. The zero-point vibration $h\omega_l$ depends on isotopes, and $^6$Li$^+$ has higher zero-point vibration $h\omega_l$ than that of $^7$Li$^+$. Similarly, in the excited state as well, $^6$Li$^+$ has higher zero-point vibration $h\omega_s$. Hence, $^6$Li$^+$, which has a smaller mass than that of $^7$Li$^+$, has higher potential energies in consideration of the zero-point vibrations $h\omega_l$ and hws in both the ground state and the excited state. However, $^6$Li$^+$ has a smaller energy barrier Em, which is a difference in potential energy between the excited state and the ground state (Em ($^7$Li$^+$) >Em ($^6$Li$^+$)), that is, $^6$Li$^+$ has a smaller activation energy Ea. As a result, $^6$Li$^+$ can hop even when the received energy is smaller than that for $^7$Li$^+$. As the excess in the received energy relative to the activation energy Ea is more, the mobility $\mu$ increases. Hence, the larger the applied voltage V1 between the respective surfaces of the electrolyte membrane 2, the more the Li$^+$ migration amount per hour.

$^6$Li$^+$ has an equivalent excess energy relative to the activation energy $E_a$ with smaller voltage V1 than that for $^7$Li$^+$, and at this time, $^6$Li$^+$ has a mobility $\mu$ higher by the ratio of the frequency $\Gamma$0. FIG. 7 shows $^6$Li$^+$ and $^7$Li$^+$ migration amounts per hour and the applied voltage dependency of the isotope ratio of mobile Li$^+$ obtained in a simulation. In the simulation, the distribution of the activation energy $E_a$ in accordance with the Maxwell-Boltzmann distribution is approximated with normal distribution. Specifically, for each of $^6$Li$^+$ and $^7$Li$^+$, the proportion of Li$^+$ which exceeded the activation energy $E_a$ (on the premise of $^6$Li$^+$<$^7$Li$^+$) is calculated for each received energy from the probability density of the normal distribution having the activation energy $E_a$ as an average value, and the accumulated value is multiplied by the ratio of the frequency $\Gamma$0 to obtain a relative value of the mobility $\mu$. The isotope ratio is calculated on the premise that the abundance ratio of $^7$Li$^+$ and $^6$Li$^+$ before migration is 1:1 for simplifying the simulation.

As shown in FIG. 7, the mobility of each of $^6$Li$^+$ and $^7$Li$^+$ increases in S-shaped curve from 0 as the applied voltage increases. $^6$Li$^+$, which has an activation energy $E_a$ smaller than that of $^7$Li$^+$, changes while shifting toward the smaller side of the voltage relative to $^7$Li$^+$, and is higher than $^7$Li$^+$ by the ratio of the frequency $\Gamma$0. Note that lim $\mu$ in FIG. 7 represents the limit of the $^6$Li$^+$ migration amount per hour. Hence, the smaller the applied voltage in the range where $^6$Li$^+$ migrates in the electrolyte membrane 2 is, the more $^6$Li$^+$ migrates relative to $^7$Li$^+$. Then, when the applied voltage increases and the mobilities of $^6$Li$^+$ and $^7$Li$^+$ converge, the difference between them decreases, and the isotope ratio converges to ($\sqrt{(7/6)}$)/(1+$\sqrt{(7/6)}$).

However, in practice, it is considered that when the voltage V1 is increased, the voltage dependency significantly decreases before the mobilities of $^6$Li$^+$ and $^7$Li$^+$ reach the limits as shown in FIG. 7. Particularly, as described above, if the voltage V1 applied between the opposite surfaces of the electrolyte membrane 2 increases to a certain value or more, part of transition metal ions forming the electrolyte membrane 2 is reduced (for example, when the electrolyte membrane 2 is formed of LLTO, $Ti^{4+}+e^-\rightarrow Ti^{3+}$), and the electrolyte membrane 2 starts conducting electrons e$^-$ from the recovery chamber 12 side to the supply chamber 11 side. As a result, since most of the given electric energy is consumed for the conduction of electrons e$^-$, the voltage dependency of the mobility of Li$^+$ decreases, and the energy efficiency in Li$^+$ migration decreases . Moreover, reduction of part of the transition metal ions forming the electrolyte membrane 2 causes the ion radius of the reduced ions to increase (for example, when the electrolyte membrane 2 is formed of LLTO, $Ti^{4+}<Ti^{3+}$), and the bottle neck for Li$^+$ migration expands, so that the $^6$Li isotope ratio of migrating Li$^+$ rapidly decreases. In addition, since the temperature of the electrolyte membrane 2 is increased by Joule heat generated by electrons e$^-$ conducted in the electrolyte membrane 2, the $^6$Li isotope ratio of migrating Li$^+$ decreases as described later.

The ion mobility $\mu$ is related to the diffusion coefficient D of the ions in Formula (7) below (T: temperature (K) and k: Boltzmann constant). The diffusion coefficient D is in proportion to the hopping rate $\Gamma$ as expressed by Formula (8) below (a: average distance between sites (jump length), $n_c$: carrier density, f: coefficient of correlation effect determined by the ions and their surroundings, d: dimension of the diffusion field). In addition, since the frequency factor $\Gamma$0 in Formula (8) is in proportion to the temperature T as expressed by Formula (9) below, and ($Z_s^{vib}/Z_l^{vib}$) is in inverse proportion to the square root of the mass number m, the frequency factor $\Gamma$0 is in inverse proportion to the square root of the mass number m (h: Planck constant, $Z_s^{vib}$: phonon dispersion at the saddle point, $Z_l^{vib}$: phonon dispersion in the initial state, $C_1$: constant) . From Formula (8) and Formula (9), the diffusion coefficient D is expressed by Formula (10) below. Then, from Formula (7) and Formula (10), the ion mobility $\mu$ is expressed by Formula (11) below (C2: constant). As shown by Formula (11), $^6$Li$^+$ which has a smaller mass number m and activation energy $E_a$ has a higher ion mobility $\mu$ than $^7$Li$^+$.

[Math. 1]

$$kT\mu = D \qquad \cdots (7)$$

$$D = \frac{a^2 n_c f}{2d}\Gamma = \frac{a^2 n_c f}{2d}\Gamma_0 exp\left(\frac{-E_a}{kT}\right) \qquad \cdots (8)$$

$$\Gamma_0 = \frac{kT}{h}\frac{Z_s^{vib}}{Z_l^{vib}} = \frac{kT}{h}\frac{C_1}{\sqrt{m}} \qquad \cdots (9)$$

$$D = \frac{a^2 n_c f}{2d}\frac{kT}{h}\frac{C_1}{\sqrt{m}}exp\left(\frac{-E_a}{kT}\right) \qquad \cdots (10)$$

$$\mu = \frac{D}{kT} = \frac{a^2 n_c f}{2dh}\frac{C_1}{\sqrt{m}}exp\left(\frac{-E_a}{kT}\right) = \frac{C_2}{\sqrt{m}}exp\left(\frac{-E_a}{kT}\right) \qquad \cdots (11)$$

Immediately after the start of voltage application shown in FIG. 5B, $^7Li^+$ and $^6Li^+$ in $Li^+$ adsorbed on the surface of the electrolyte membrane 2 have the same isotope ratio as $Li^+$ in the Li-containing aqueous solution ASi. However, due to the difference in migration speed between $^7Li^+$ and $^6Li^+$, more $^6Li^+$ migrates to the Li site defect of the electrolyte membrane 2 than the $^6Li$ isotope ratio ($^6Li/(^7Li+^6Li)$) of the Li-containing aqueous solution ASi. $^6Li^+$ migrates also faster than $^7Li^+$ between Li site defects in the electrolyte membrane 2 and further into the $^6Li$ recovery aqueous solution ASo. As a result, $^6Li^+$ decreases to a greater extent of the $Li^+$ adsorbed on the surface of the electrolyte membrane 2. Then, new $^7Li^+$ and $^6Li^+$ from the Li-containing aqueous solution ASi are adsorbed at the empty spots on the surface at the same isotope ratio as the Li-containing aqueous solution ASi. By repeating this behavior, the $^6Li$ isotope ratio of the $Li^+$ remaining in the Li-containing aqueous solution ASi ($^6Li/(^7Li+^6Li)$ ) gradually decreases, and the $^6Li$ isotope ratio of the newly migrating $Li^+$ decreases. Specifically, the $^6Li$ isotope ratio of migrating $Li^+$ is at its maximum immediately after the start of application of the voltage +V1, and then decreases exponentially as the application time elapses (see Patent Literature 4).

Therefore, in the lithium isotope enrichment method according to this embodiment, a small amount of Li having a high $^6Li$ isotope ratio is repeatedly recovered by applying the voltage +V1 for a short time (first step) . When the Li migration has progressed to some extent by the application of the voltage +V1 immediately before one voltage application is stopped, it is considered as described above that the $Li^+$ adsorbed on the surface of the electrolyte membrane 2 has a $^6Li$ isotope ratio lower than that of the $Li^+$ remaining in the Li-containing aqueous solution ASi at this point, due to the $^6Li^+$ preferentially migrating into the electrolyte membrane 2 (see FIG. 5C). Therefore, before starting the next application of the voltage +V1, $^7Li^+$ and $^6Li^+$ adsorbed on the surface of electrolyte membrane 2 are once removed. When the application of the voltage +V1 is stopped to create a non-applied state, the migration of $Li^+$ in the electrolyte membrane 2 is stopped, and the $Li^+$ in the Li-containing aqueous solution ASi and the $^6Li$ recovery aqueous solution ASo floats through the aqueous solutions ASi and ASo, respectively, and repeatedly adsorbs and desorbs on the front and back surfaces of the electrolyte membrane 2 (see FIG. 5A) . However, in the Li-containing aqueous solution ASi, $Li^+$ adsorbed on the surface of the electrolyte membrane 2 is electrically attracted to the deep side (back side) of the electrolyte membrane 2 by the application of the voltage +V1 until just before the voltage application is stopped. Therefore, even after the application of the voltage +V1 is stopped, $Li^+$ does not immediately desorb from the surface of the electrolyte membrane 2.

Therefore, in the lithium isotope enrichment method according to this embodiment, when the application of the voltage +V1 is stopped, the sub-power supply 52 starts to apply the negative voltage V2 (voltage -V2), with respect to the first electrode 31, to the third electrode 33 (second step). This application of the voltage -V2 causes a potential gradient in the Li-containing aqueous solution ASi, where the potential near the surface of the electrolyte membrane 2 is positive and the potential near the third electrode 33 is negative. Then, the $Li^+$ adsorbed on the surface of the electrolyte membrane 2 quickly desorbs due to electrostatic repulsion, as shown in FIG. 5D.

The application of the voltage -V2 enables $Li^+$ to quickly desorb from the surface of the electrolyte membrane 2. Accordingly, when the application of the voltage -V2 is stopped and the application of the voltage +V1 by the main power supply 51 is started again, new $Li^+$ adsorbs on the surface of the electrolyte membrane 2 as shown in FIG. 5B. This $Li^+$ adsorbed on the surface of the electrolyte membrane 2 has the same isotope ratio as $Li^+$ in the Li-containing aqueous solution ASi at this point. Therefore, the $^6Li$ isotope ratio becomes higher than that of the $Li^+$ adsorbed on the surface of the electrolyte membrane 2 immediately before the previous application of the voltage +V1 is stopped (see FIG. 5C). As a result, Li having a high $^6$Li isotope ratio can be recovered even in this short application of the voltage +V1. The application of the voltage +V1 between both surfaces of the electrolyte membrane 2 (between the first electrode 31 and the second electrode 32) (first step) and the application of the voltage -V2 between the third electrode 33 and the first electrode 31 (second step) are thus alternately performed in a short period of time. This makes it possible to recover a larger amount of Li having a higher $^6$Li isotope ratio, compared to continuous application of the voltage +V1.

As described above, the larger the voltage V1, the higher the Li$^+$ mobility and the larger the Li$^+$ migration amount per hour. However, when the voltage V1 increases to a certain value or more, the electrolyte membrane 2 begins to exhibit electron conductivity. As a result, the energy efficiency for increasing the Li$^+$ mobility decreases, and the $^6$Li isotope ratio of the migrating Li$^+$ rapidly decreases. On the other hand, the smaller the voltage V1, the higher the mobility of $^6$Li$^+$ relative to $^7$Li$^+$ and the larger the isotope separation factor. Therefore, the voltage V1 is preferably such that the electrolyte membrane 2 does not exhibit electron conductivity, and is further preferably smaller. However, the smaller the voltage V1, the lower the mobility of Li$^+$. Therefore, the voltage V1 is preferably set to a smaller level that does not reduce productivity too much. Specifically, depending on the electron conductivity of the electrolyte membrane 2 and the electrode performance to determine the electrode reaction overvoltage, when a voltage exceeding 2.0 V is applied, the electrolyte membrane 2 may exhibit electron conductivity. Meanwhile, the lower limit of the voltage V1 is not particularly defined as long as Li$^+$ can migrate in the electrolyte membrane 2. Depends on the electronic conductivity of the electrolyte membrane 2 and the hydrogen ion concentration in the aqueous solutions ASi and ASo, the voltage V1 is preferably set to more than or equal to 0.5 V. The voltage V1 is preferably set according to the required $^6$Li enrichment effect, in combination with one continuous application time (electrodialysis period) $t_{ED}$.

The larger the voltage V2, the larger the electric field applied to the Li-containing aqueous solution ASi between the surface of the electrolyte membrane 2 and the third electrode 33, causing Li$^+$ to be rapidly attracted to the third electrode 33. This causes the Li$^+$ adsorbed on the surface of the electrolyte membrane 2 to desorb more quickly. Meanwhile, when the voltage V2, that is, the potential difference between the first electrode 31 and the third electrode 33 exceeds a certain value, an electrolytic reaction of H$_2$O (reactions of Formulas (1) and (3)) occurs in the Li-containing aqueous solution ASi, reducing the energy efficiency. Therefore, the voltage V2 is preferably set to a level that does not cause the electrolytic reaction of H$_2$O, and is smaller than the voltage V1 at most. Regarding such a voltage V2, the third electrode 33 is preferably disposed at a short distance from the first electrode 31, so that the electric field between the surface of the electrolyte membrane 2 and the third electrode 33 is increased.

The continuous application time (electrodialysis period) $t_{ED}$ for one continuous application of the voltage +V1 and the continuous application time (reset period) $t_{RST}$ for one continuous application of the voltage -V2 are not particularly specified, but are preferably set to achieve sufficiently high recovery efficiency of $^6$Li. The shorter the electrodialysis period $t_{ED}$, the higher the $^6$Li isotope ratio of Li to be recovered. Specifically, the electrodialysis period $t_{ED}$ is preferably less than or equal to 1 second, and more preferably about 0.5 seconds . The reset period $t_{RST}$ should be such that the Li$^+$ adsorbed on the surface of the electrolyte membrane 2 by the previous application of the voltage +V1 desorbs a sufficient amount of it, preferably all of it. Even if the reset period $t_{RST}$ is longer than that, the $^6$Li recovery efficiency is not improved, and the ratio of the electrodialysis period $t_{ED}$ to a period $t_{CYC}$ decreases, resulting in reduced time efficiency (productivity). As for the reset period $T_{RST}$, the effect can be achieved with shorter as the voltage V2 is larger and the interval between the third electrode 33 and the first electrode 31 is shorter.

Furthermore, it is preferable that the voltage +V1 and the voltage -V2 are not applied at the same time. The application of the voltage -V2 relatively reduces the concentration of Li$^+$ near the surface of the electrolyte membrane 2 in the Li-containing aqueous solution ASi. Therefore, when the voltage -V2 is applied upon application of the voltage +V1, the Li$^+$ migration from the Li-containing aqueous solution ASi to the $^6$Li recovery aqueous solution ASo is inhibited, resulting in reduced energy efficiency. Particularly, immediately after the start of the application of the voltage +V1 at which the $^6$Li isotope ratio of migrating Li$^+$ is at its maximum, it is preferable that the voltage -V2 is not applied. On the other hand, there may be non-application periods $t_{int1}$ and $t_{int2}$ in which neither the voltage +V1 nor the voltage -V2 is applied. However, the longer the non-application periods $t_{int1}$ and $t_{int2}$, the lower the productivity. Therefore, it is preferable that the application of the voltage -V2 (reset period $t_{RST}$) is started on or after the application of the voltage +V1 (electrodialysis period $t_{ED}$) is stopped ($t_{int1} \geq 0$). It is more preferable that the application of the voltage -V2 is started more soon after the application of the voltage +V1 is stopped. It is even more preferable that the application of the voltage -V2 is started at the same time as when the application of the voltage +V1 is stopped ($t_{int1} = 0$) . Furthermore, it is preferable that the application of the voltage +V1 (electrodialysis period $t_{ED}$) is started on or after the application of the voltage -V2 (reset period $t_{RST}$) is stopped ($t_{int2} \geq 0$) . It is more preferable that the application of the voltage +V1 is started after the application of the voltage -V2 is stopped ($t_{int2} > 0$) . The timing of starting and stopping the application of the voltage +V1 and the voltage -V2 is preferably set according to the timing accuracy of the power supply unit 5 and the like, so that the voltage +V1 and the voltage -V2 are not applied at the same time.

In the lithium isotope enrichment method according to this embodiment, the higher the Li$^+$ concentration of the Li-containing aqueous solution ASi, the supply side, the higher the Li$^+$ mobility in the electrolyte membrane 2, making it possible to increase the $^6$Li enrichment rate. Therefore, the Li-containing aqueous solution ASi preferably has a higher Li$^+$ concentration, and is more preferably a saturated aqueous solution or a supersaturated aqueous solution of Li$^+$. Therefore, to suppress a decrease in the Li$^+$ concentration of the Li-containing aqueous solution ASi as the operation time elapses, it is preferable to replace the Li-containing aqueous solution ASi in the supply chamber 11 every time a predetermined operation application time elapses, or when the Li$^+$ concentration of the $^6$Li recovery aqueous solution ASo decreases and reaches a predetermined value, for example. It is more preferable to constantly circulate the Li-containing aqueous solution ASi to and from the outside of the processing tank 1 during operation. By thus replacing the Li-containing aqueous solution ASi, a decrease in $^6$Li isotope ratio ($^6$Li/ ($^7$Li+$^6$Li) ) of Li$^+$ remaining in the Li-containing aqueous solution ASi due to the Li$^+$ migration is suppressed. This suppresses a decrease in $^6$Li isotope ratio of newly migrating Li$^+$, thus allowing for more efficient enrichment of $^6$Li. Further, it is possible to compensate for a reduction in the amount of the Li-containing aqueous solution ASi due to the reaction of Formula (1). Note that the amount of the $^6$Li recovery aqueous solution ASo is also reduced by the reaction of Formula (3). It is therefore preferable to add water ($H_2O$) or the like to the recovery chamber 12 as necessary. In the lithium isotope enrichment device 10, it is preferable that the liquid levels in the supply chamber 11 and the recovery chamber 12 are the same during operation.

As shown in Formula (11) above, the ion mobility $\mu$ also depends on the temperature T, and the degree of this dependence is influenced by the activation energy $E_a$. Although the mobility of each of $^7$Li$^+$ and $^6$Li$^+$ exponentially increases as the temperature increases, $^7$Li$^+$ having a larger activation energy $E_a$ has larger temperature dependency. Hence, as the temperature increases, the ratio between $^7$Li$^+$ having a low mobility and $^6$Li$^+$ having a high mobility becomes smaller. Therefore, the lower the temperature where the Li$^+$ mobility is low, the higher the $^6$Li isotope ratio of migrating Li$^+$. The temperature range which can be employed in this embodiment is equal to or more than the coagulation points and less than the boiling points of the aqueous solutions ASi and ASo, and is 0 to 100 °C in the case where the $^6$Li recovery aqueous solution ASo is pure water at the time of starting the electrodialysis. Accordingly, the temperature of the electrolyte membrane 2 is preferably 20 °C or less, more preferably 15 °C or less, further preferably 10 °C or less, and still further preferably 5 °C or less.

For the $^6$Li recovery aqueous solution ASo after the completion of $^6$Li enrichment, for example, $^6$Li can be recovered by evaporating the water content as necessary to increase Li concentration, and then generating lithium carbonate ($Li_2CO_3$) by carbon dioxide gas ($CO_2$) bubbling or the like, followed by precipitation. Alternatively, $^6$Li can be recovered by generating lithium carbonate, and further causing oversaturated state by cooling or evaporating the water content to generate lithium hydroxide (LiOH), followed by precipitation.

(Modification)

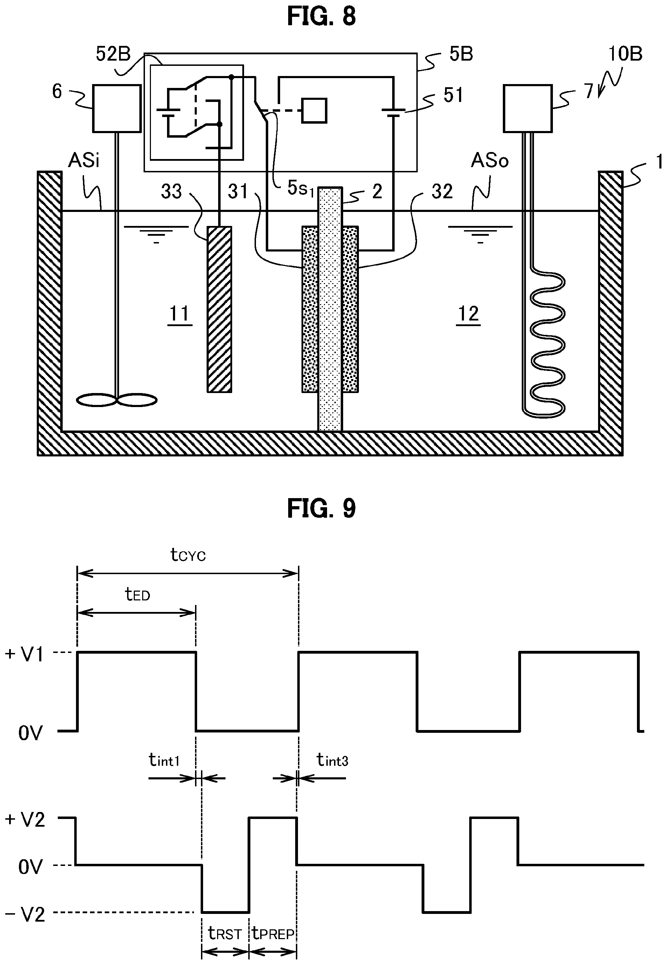

In the lithium isotope enrichment device according to the above embodiment, while the voltage application between both surfaces of the electrolyte membrane is stopped, a potential gradient where the potential near the surface of the electrolyte membrane is high is formed in the Li-containing aqueous solution in the supply chamber. This causes the lithium ions adsorbed on the surface of the electrolyte membrane to efficiently desorb. However, at the time when the voltage application between both surfaces of the electrolyte membrane is resumed, the lithium ion concentration in the Li-containing aqueous solution is relatively low near the surface of the electrolyte membrane. Therefore, it takes time for lithium ions to be adsorbed to the surface of the electrolyte membrane. This prevents the mobility of lithium ions in the electrolyte membrane from increasing immediately after the voltage application is resumed, resulting in insufficient energy efficiency. Therefore, the following configuration is employed to resolve the low concentration of lithium ions near the surface of the electrolyte membrane before resuming the voltage application between both surfaces of the electrolyte membrane after the lithium ions are temporarily desorbed from the surface of the electrolyte membrane. Hereinafter, a lithium isotope enrichment device and a lithium isotope enrichment method according to a modification of the first embodiment of the present invention will be described with reference to FIGs. 8 and 9.

As shown in FIG. 8, a lithium isotope enrichment device 10B according to the modification of the first embodiment of the present invention includes: a processing tank 1; an electrolyte membrane (lithium ion-conducting electrolyte membrane) 2 that partitions the processing tank 1 into two parts; a first electrode 31 and a second electrode 32 (porous electrodes) applied to the respective surfaces of the electrolyte membrane 2; a third electrode (sub-electrode) 33; a power supply unit 5B; a stirring device (circulator means) 6; and a cooling device 7. The power supply unit 5B includes a main power supply 51 and a sub-power supply 52B that applies a voltage while switching its polarity. The main power supply 51 is connected to the first electrode 31 and the second electrode 32. The sub-power supply 52B is connected to the first electrode 31 and the third electrode 33. Therefore, the lithium isotope enrichment device 10B according to this modification has a configuration obtained by replacing the sub-power supply 52, which is a DC power supply, in the lithium isotope enrichment device 10 according to the embodiment shown in FIG. 1 with the sub-power supply 52B.

The power supply unit 5B includes the main power supply 51, which is a DC power supply, and the sub-power supply 52B that can apply a voltage while switching its polarity. The power supply unit 5B further includes a switching element 5s$_1$ and its drive circuit and the like. The main power supply 51 and the sub-power supply 52B alternately apply voltages by switching the switching element 5s$_1$. As with the above embodiment, the main power supply 51 has a positive

electrode connected to the first electrode 31 and a negative electrode connected to the second electrode 32, so that a positive voltage V1 (voltage +V1), with respect to the second electrode 32, is applied intermittently to the first electrode 31. The sub-power supply 52B is connected to the first electrode 31 and the third electrode 33, and applies a DC voltage V2 by alternately reversing its polarity. Specifically, as shown in FIG. 9, while the main power supply 51 is not applying the voltage +V1, the sub-power supply 52B first applies a negative voltage V2 (voltage -V2), with respect to the first electrode 31, to the third electrode 33 during this one stop period of the voltage +V1, and then reverses the polarity and applies a positive voltage V2 (voltage +V2), with respect to the first electrode 31, to the third electrode 33. The timing of applying the voltages V1 and V2 will be described in detail later.

The power supply unit 5B may be configured to include, for example, a variable power supply 51A (see FIG. 3) and a switching element that switches the connection destinations of two poles thereof. In the lithium isotope enrichment device 10B shown in FIG. 8, as in the case of the above embodiment, the third electrode 33 is in an open state during application of the voltage +V1 between the first electrode 31 and the second electrode 32 by the power supply unit 5B, while the second electrode 32 is in an open state during application of voltages -V2 and +V2 between the third electrode 33 and the first electrode 31. Alternatively, the third electrode 33 may be configured to be connected to the same potential as the first electrode 31 during application of the voltage +V1 between the first electrode 31 and the second electrode 32 by the power supply unit 5B. Further, the second electrode 32 may be configured to be connected to the same potential as the first electrode 31 during application of the voltage -V2 or the voltage +V2 between the third electrode 33 and the first electrode 31.

(Lithium Isotope Enrichment Method)

In the lithium isotope enrichment method according to the modification of the embodiment of the present invention, a first step of applying a positive voltage V1, with respect to the second electrode 32 provided on the back surface of the electrolyte membrane 2, to the first electrode 31 provided on the front surface, a second step of applying a negative voltage V2, with respect to the first electrode 31, to the third electrode 33, and a third step of applying a positive voltage V2, with respect to the first electrode 31, to the third electrode 33 are repeated in this order. The first step (electrodialysis period $t_{ED}$) and the second step (reset period $t_{RST}$) are as described in the embodiment (see FIG. 2). In the lithium isotope enrichment method according to this modification, a preparation period $t_{PREP}$ is provided as the third step after the second step and before the next first step.

As described in the embodiment, after the application of the voltage +V1 (first step), Li$^+$ adsorbed on the surface of the electrolyte membrane 2 is desorbed, as shown in FIG. 5D, by applying the voltage -V2 (second step). Specifically, Li$^+$ is desorbed by electrostatic repulsion from the positively charged surface of the electrolyte membrane 2. Then, Li$^+$ in the Li-containing aqueous solution ASi is unevenly distributed near the third electrode 33 due to electrostatic attraction, resulting in a relative reduction in Li$^+$ concentration near the surface of the electrolyte membrane 2. In the lithium isotope enrichment method according to this modification, after the sub-power supply 52B applies the voltage -V2 in the second step, the polarity of the sub-power supply 52B is reversed, and a positive voltage V2 (voltage +V2), with respect to the first electrode 31, is applied to the third electrode 33 (third step). The application of the voltage +V2 causes a potential gradient in the Li-containing aqueous solution ASi, where the potential near the surface of the electrolyte membrane 2 is negative and the potential near the third electrode 33 is positive. Then, Li$^+$ unevenly distributed near the third electrode 33 in the second step quickly separates from the third electrode 33 due to electrostatic repulsion, and the electrostatic repulsion between Li$^+$ and the surface of the electrolyte membrane 2 is quickly released. As a result, the relatively low concentration of Li$^+$ near the surface of the electrolyte membrane 2 is eliminated. Furthermore, Li$^+$ unevenly distributed near the third electrode 33 and Li$^+$ floating in the Li-containing aqueous solution ASi are attracted to the negatively charged surface of the electrolyte membrane 2 by electrostatic attraction, resulting in increased concentration in this vicinity and leaving some of Li$^+$ adsorbed on the surface. The Li$^+$ adsorbed on the surface of the electrolyte membrane 2 at this time has the same isotope ratio as the Li$^+$ in the Li-containing aqueous solution ASi at this point.

When the application of the voltage +V2 is stopped and the application of the voltage +V1 is resumed by the main power supply 51, the Li$^+$ adsorbed on the surface of the electrolyte membrane 2 migrates into the electrolyte membrane 2, as shown in FIGs. 5B and 5C. In this way, after applying the voltage -V2 between the third electrode 33 and the first electrode 31, the polarity is reversed and the voltage +V2 is applied, and then the voltage +V1 is applied between both surfaces of the electrolyte membrane 2 (the first electrode 31 and the second electrode 32). This makes it possible to recover a large amount of Li having a high $^6$Li isotope ratio immediately after the start of application of the voltage +V1.

The magnitude of the voltage applied between the third electrode 33 and the first electrode 31 does not need to be the same in the second step and the third step. In the third step, the larger the voltage V2, the larger the electric field applied to the Li-containing aqueous solution ASi between the surface of the electrolyte membrane 2 and the third electrode 33, causing Li$^+$ to be quickly separated from the third electrode 33 and also attracted to the surface of the electrolyte membrane 2. Thus, the low concentration of Li$^+$ near the surface of the electrolyte membrane 2 can be resolved more quickly, and $Li^+$ can be adsorbed onto the surface of the electrolyte membrane 2. As described in the embodiment above, it is preferable that the magnitude of the voltage is set such that the electrolytic reaction of $H_2O$ does not occur in the Li-containing aqueous solution ASi.

The continuous application time (preparation period) $t_{PREP}$ for one continuous application of the voltage +V2 is not particularly specified, and is preferably set to ensure sufficiently high $^6Li$ recovery efficiency, as with the electrodialysis period $t_{ED}$ and the reset period $t_{RST}$. The preparation period $t_{PREP}$ may be set so as to resolve the low $Li^+$ concentration state near the surface of the electrolyte membrane 2 caused by the previous application of the voltage -V2. It is also preferable that the concentration of $Li^+$ near the surface of the electrolyte membrane 2 is increased and more $Li^+$ is adsorbed on the surface. However, even when a large amount of $Li^+$ is adsorbed on the surface of the electrolyte membrane 2, there is a limit to the improvement in the mobility of $Li^+$ immediately after the start of application of the voltage +V1. Moreover, the longer the preparation period $t_{PREP}$, the lower the ratio of the electrodialysis period $t_{ED}$ to the period $t_{CYC}$, resulting in reduced productivity. As for the preparation period $t_{PREP}$, as with the reset period $T_{RST}$, the effect can be achieved with shorter as the voltage V2 is larger and the interval between the third electrode 33 and the first electrode 31 is shorter.

The longer the non-application period in which neither the voltage -V2 nor the voltage +V2 is applied between the third electrode 33 and the first electrode 31 between the reset period $t_{RST}$ and the preparation period $t_{PREP}$, the lower the productivity. Therefore, it is preferable that the application of the voltage +V2 is started more quickly after the application of the voltage -V2 is stopped. It is more preferable that the application of the voltage +V2 is started at the same time as when the application of the voltage -V2 is stopped, as shown in FIG. 9. In addition, when the no-application period $t_{int3}$ is long before the application of the voltage +V1 is started (electrodialysis period $t_{ED}$) after the application of the voltage +V2 is stopped (preparation period $t_{PREP}$), the productivity is reduced, and the effect of the voltage +V2 application is also reduced. Therefore, it is preferable that the application of the voltage +V1 is started more quickly after the application of the voltage +V2 is stopped. It is more preferable that the application of the voltage +V1 is started at the same time as when the application of the voltage +V2 is stopped ($t_{int3}$= 0). The voltage +V2 may be applied when the voltage +V1 is applied (electrodialysis period $t_{ED}$). Therefore, the application of the voltage +V2 may be stopped after the application of the voltage +V1 is started. In this case, the preparation period $t_{PREP}$ is set from the start of application of the voltage +V2 to the start of application of the voltage +V1.

In the lithium isotope enrichment method according to this embodiment and the modification thereof, it is possible to recover $^6Li$ while increasing the isotope ratio of $^6Li$ as the temperature of the electrolyte membrane 2 is lower as described above. However, cooling at a temperature equal to or higher than the coagulation point is necessary so that the Li-containing aqueous solution ASi or the $^6Li$ recovery aqueous solution ASo do not freeze. In view of this, the aqueous solutions ASi and ASo, particularly the $^6Li$ recovery aqueous solution ASo may contain a solute that does not pass through the electrolyte membrane 2 so that the coagulation point is lowered to below 0 °C. Such a solute should be one that does not corrode the electrolyte membrane 2, the electrodes 31 and 32 or the like when contained in the aqueous solutions ASi and ASo. Specifically, such a solute includes salts such as sodium chloride (NaCl, common salt), magnesium chloride ($MgCl_2$), calcium chloride ($CaCl_2$), and potassium chloride (KCl) or organic solvents such as ethylene glycol. As described above, in a case of bubbling carbon dioxide gas to recover $^6Li$ from the $^6Li$ recovery aqueous solution ASo after the completion of electrodialysis, sodium chloride is particularly preferable, which does not generate precipitates (carbonates) other than lithium carbonate and significantly lowers the coagulation point. As for the $^6Li$ recovery aqueous solution ASo, in the case where Li concentration is increased by evaporating the water content before bubbling carbon dioxide gas, it is preferable to conduct bubbling after removing salts precipitated by reduction of the water content by using a general method such as filtration. Alternatively, for the recovered $^6Li$ recovery aqueous solution ASo, Li may be selectively recovered into pure water or the like by conducting normal electrodialysis or the like (see, for example, Patent Literature 3) at 0 °C or higher, for example, a temperature higher than or equal to room temperature before bubbling of carbon dioxide gas. Such methods make it possible to efficiently enrich $^6Li$ while further increasing the isotope ratio of $^6Li$ by cooling the electrolyte membrane 2 to 0 °C or lower, more preferably lower than 0 °C.

[Multi-stage Lithium Isotope Enrichment Device]

(First Embodiment)

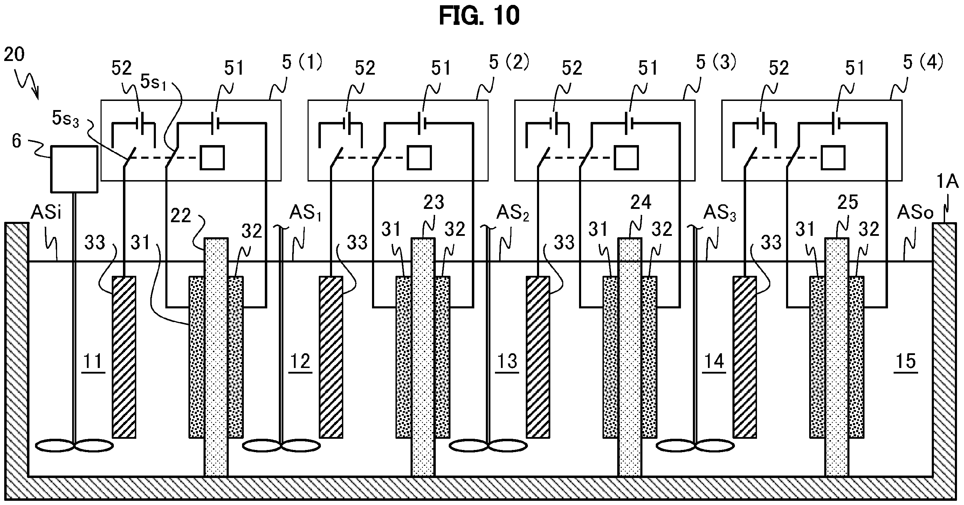

In the lithium isotope enrichment devices 10 and 10B according to the embodiment and the modification thereof, a Li-containing aqueous solution ($^6Li$ recovery aqueous solution ASo) with a higher isotope ratio of $^6Li$ than that of the Li-containing aqueous solution ASi in the supply chamber 11 can be obtained in the recovery chamber 12. A Li-containing aqueous solution having a further higher isotope ratio of $^6Li$ can be obtained by feeding this $^6Li$ recovery aqueous solution ASo after the recovery of Li into an emptied supply chamber 11. $^6Li$ can be enriched stepwise by employing a cascade structure in which the recovery chamber 12 of the lithium isotope enrichment device 10 is coupled to a supply chamber 11 of a different lithium isotope enrichment device 10 in an integrating manner. A multi-stage lithium isotope enrichment device according to the first embodiment of the present invention will be described below with reference to FIG. 10.

A multi-stage lithium isotope enrichment device 20 according to the first embodiment of the present invention includes: a processing tank 1A; four electrolyte membranes (lithium ion-conducting electrolyte membranes) 22, 23, 24, and 25 disposed parallel to each other at intervals so as to partition the processing tank 1A into five chambers 11, 12, 13, 14, and 15 in one direction; a first electrode 31 and a second electrode 32 (porous electrodes) applied to both surfaces of each of the electrolyte membranes 22, 23, 24, and 25; a third electrode (sub-electrode) 33 disposed facing the first electrode 31 in each of the chambers 11, 12, 13, and 14; four power supply units 50; and a stirring device (circulator means) 6 disposed in each of the chambers 11, 12, 13, and 14. The multi-stage lithium isotope enrichment device 20 has a structure in which four of the lithium isotope enrichment devices 10 are coupled so that the respective processing tanks 1 are integrated together into the processing tank 1A. The recovery chamber 12 of one of neighboring two of the lithium isotope enrichment devices 10, 10 also serves as the supply chamber 11 of the other. The electrolyte membranes 22, 23, 24, and 25 may have the same configuration as that of the electrolyte membrane 2 in the lithium isotope enrichment device 10, and are referred to as the electrolyte membrane 2 as appropriate unless particularly distinguished from each other.

The chamber 11 at the end which is closer to the supply chamber 11 in the lithium isotope enrichment device 10 (the left side in FIG. 10; hereinafter referred to as the supply side), of processing tank 1A, is the supply chamber 11, as with the lithium isotope enrichment device 10, and stores the Li-containing aqueous solution ASi. The chambers 12, 13, 14, and 15 contain $^6$Li recovery aqueous solutions $AS_1$, $AS_2$, $AS_3$, and ASo, respectively. The $^6$Li recovery aqueous solutions $AS_1$, $AS_2$, $AS_3$, and ASo are aqueous solutions for storing lithium ions $Li^+$ recovered from the Li-containing aqueous solution ASi, as with the $^6$Li recovery aqueous solution ASo in the lithium isotope enrichment device 10. The $^6$Li recovery aqueous solutions $AS_1$, $AS_2$, $AS_3$, and ASo are pure water, for example, when the multi-stage lithium isotope enrichment device 20 starts its operation. The side of the recovery chamber 12 in the lithium isotope enrichment device 10 (the right side in FIG. 10) is referred to as the recovery side. In the multi-stage lithium isotope enrichment device 20, the chamber 15 at the end on the recovery side serves as a recovery chamber.

In the multi-stage lithium isotope enrichment device 20, the second electrode 32, the third electrode 33, and the first electrode 31 are disposed in this order from the supply side in each of the chambers 12, 13, and 14, except for the chambers 11 and 15 at both ends. The second electrode 32 and the first electrode 31 in the same chamber are disposed with a sufficient distance from each other, that is, the four electrolyte membranes 2 are disposed with a sufficient distance from each other. The second electrode 32 and the third electrode 33 in the same chamber are disposed apart from each other, and further, preferably, with a sufficient distance between them. Therefore, the chambers 12, 13, and 14 are each designed to have a sufficient length in the partition direction of the processing tank 1A (the coupling direction of the lithium isotope enrichment devices 10, the left-right direction in FIG. 10) . On the other hand, it is preferable that the third electrode 33 and the first electrode 31 in the same chamber are disposed close to each other to the extent that they do not short-circuit, as described in the configuration of the lithium isotope enrichment device 10.

The power supply unit 5 is as described in the configuration of the lithium isotope enrichment device 10. The power supply unit 5 includes a main power supply 51 and a sub-power supply 52, and is configured so that they are not driven at the same time. In the multi-stage lithium isotope enrichment device 20, it is preferable that the four power supply units 5 are driven independently, in other words, each power supply unit 5 is configured independently so that the main power supply 51 is connected to the electrodes 31 and 32 and the sub-power supply 52 is connected to the electrodes 31 and 33. The four power supply units 5 in the multi-stage lithium isotope enrichment device 20 are referred to as the power supply units 5(1), 5(2), 5(3), and 5(4), respectively, from the supply chamber 11 side, when distinguished from each other. In this embodiment, the power supply unit 5 includes two interlocking switching elements $5_{S1}$ and $5_{S3}$. The switching element $5_{S1}$ switches the connection destination of the first electrode 31, as described in the configuration of the lithium isotope enrichment device 10. The switching element $5_{S3}$ switches between connection and disconnection of the third electrode 33 and the sub-power supply 52, that is, ON and OFF of the sub-power supply 52. In the multi-stage lithium isotope enrichment device 20, the power supplies 51 and 52 are preferably floating power supplies, or only one of the power supplies 51 and 52 may be grounded. Alternatively, the positive electrode of the main power supply 51 and the negative electrode of the sub-power supply 52 in the power supply unit 5(1) may be configured to be grounded during drive thereof, so that the Li-containing aqueous solution ASi in the supply chamber 11 is grounded to a reference potential, for example. However, when the resistance between the second electrode 32 and the first electrode 31 in each of the chambers 12, 13, and 14 is sufficiently high, the two or more power supplies 51 and 52 may be grounded.

The stirring device 6 circulates the aqueous solutions ASi, $AS_1$, $AS_2$, and $AS_3$ in the chambers 11, 12, 13, and 14, respectively. The multi-stage lithium isotope enrichment device 20 may further include a stirring device 6 in the recovery chamber 15 to circulate the $^6$Li recovery aqueous solution ASo. The multi-stage lithium isotope enrichment device 20 may further include a cooling device 7 (see FIG. 1) to cool the electrolyte membranes 22, 23, 24, and 25, if necessary (not shown). The stirring device 6 and the throw-in type cooling device 7, when installed in the chambers 12, 13, and 14, are preferably disposed between the second electrode 32 (electrolyte membrane 2) and the third electrode 33. Other components are as described in the configuration of the lithium isotope enrichment devices 10 and 10B.

(Lithium Isotope Enrichment Method Using Multi-Stage Lithium Isotope Enrichment Device)

A lithium isotope enrichment method using the multi-stage lithium isotope enrichment device 20 according to this embodiment is the same as the method using the lithium isotope enrichment device 10. In FIG. 10, the supply chamber 11 at the left end is filled with a Li-containing aqueous solution ASi containing $^{7}Li$ and $^{6}Li$ in their natural abundance ratio. The other chambers 12, 13, 14, and 15 are filled with pure water, respectively. As described above, the $Li^{+}$ mobility in the electrolyte membrane 2 increases as the $Li^{+}$ concentration in the aqueous solution on the upstream side (supply side) increases. Therefore, immediately after the start of operation, $Li^{+}$ migrates from the Li-containing aqueous solution ASi in the supply chamber 11 to the aqueous solution $AS_1$, which is pure water, in the chamber 12. In other words, in terms of energy efficiency, it is preferable to increase the $Li^{+}$ concentration in the aqueous solution $AS_1$ by the $Li^{+}$ migration only in the electrolyte membrane 22. For this purpose, only the power supply unit 5(1) is driven. When the aqueous solution $AS_1$ reaches a predetermined $Li^{+}$ concentration, preferably a saturated concentration, the power supply unit 5 (2) is further driven to start $Li^{+}$ migration from the aqueous solution $AS_1$ to the aqueous solution $AS_2$ stored in the chamber 13.

Then, the $Li^{+}$ migration from the Li-containing aqueous solution ASi to the aqueous solution $AS_1$ and the $Li^{+}$ migration from the aqueous solution $AS_1$ to the aqueous solution $AS_2$ proceed concurrently. Once the aqueous solution $AS_2$ reaches a predetermined $Li^{+}$ concentration, the power supply unit 5(3) is further driven to start $Li^{+}$ migration from the aqueous solution $AS_2$ to the aqueous solution $AS_3$ stored in the chamber 14. This is repeated and finally all the power supply units 5 of the multi-stage lithium isotope enrichment device 20 are driven. This causes $Li^{+}$ to migrate from left to right in FIG. 10. As a result, the aqueous solutions $AS_1$, $AS_2$, $AS_3$, and ASo in each of the chambers 12, 13, 14, and 15 turn from pure water at the start of operation to LiOH aqueous solutions containing Li with different $^{6}Li$ isotope ratios at different concentrations. The $^{6}Li$ isotope ratio increases in the order of $ASi < AS_1 < AS_2 < AS_3 < ASo$. Therefore, even when the isotope separation factor due to the $Li^{+}$ migration in one electrolyte membrane 2 is not high, Li with a high $^{6}Li$ isotope ratio can be recovered from the recovery chamber 15. This eliminates the need to extremely reduce the $Li^{+}$ mobility by lowering the temperature or voltage. The productivity can thus be increased.

The multi-stage lithium isotope enrichment device 20 is designed, for example, such that even if the main power supply 51 or sub-power supply 52 of another power supply unit 5 is driven while the main power supply 51 of the power supply unit 5(2) is driven to apply the voltage +V1 between the first electrode 31 and the second electrode 32 applied on both surfaces of the electrolyte membrane 23, substantially no electric field is generated between the first electrode 31 and the third electrode 33 or the second electrode 32 in the chamber 12, or between the second electrode 32 and the third electrode 33 or the first electrode 31 in the chamber 13. Even if an electric field is generated, the multi-stage lithium isotope enrichment device 20 is designed to sufficiently weaken the electric field so as not to inhibit the reactions of Formulas (1) and (3) near the electrodes 31 and 32 on both surfaces of the electrolyte membrane 23. To this end, as described above, the spacing between the electrolyte membranes 2 and the spacing between the second electrode 32 and the third electrode 33 are set to be sufficiently wide. With such a configuration, two or more neighboring power supply units 5 can be driven simultaneously. For example, the power supplies 51 and 52 of the four power supply units 5 may be synchronized to drive the main power supplies 51 simultaneously as shown in FIG. 10. Alternatively, the main power supplies 51 and sub-power supplies 52 of different power supply units 5 may be driven simultaneously.

In the multi-stage lithium isotope enrichment device 20, the number of electrolyte membranes 2 is not particularly specified. With more electrolyte membranes, that is, more lithium isotope enrichment devices 10 coupled, Li with a higher $^{6}Li$ isotope ratio can be recovered. In FIG. 10, all neighboring electrolyte membranes 2 and 2 are disposed facing each other in the structure where the lithium isotope enrichment devices 10 are coupled in one direction. For example, the lithium isotope enrichment devices 10 may be coupled with one to two or more 90° bends, with neighboring electrolyte membranes 2 and 2 disposed perpendicularly to each other at the bends. In a chamber at the bend partitioned by electrolyte membranes 2 and 2 disposed perpendicularly to each other, the third electrode 33 is disposed parallel to and close to the first electrode 31 applied on the surface of the electrolyte membrane 2 on the recovery side.

(Modification)

The multi-stage lithium isotope enrichment device 20 may have a configuration in which a plurality of lithium isotope enrichment devices 10B are coupled, that is, includes a power supply unit 5B in place of the power supply unit 5.

In the multi-stage lithium isotope enrichment device 20 according to the embodiment, the electrolyte membranes 2 are disposed with a wide space therebetween to enable concurrent $Li^{+}$ migration between neighboring electrolyte membranes 2, resulting in a need for a processing tank 1A that is long in the coupling direction of the lithium isotope enrichment devices 10. Here, the lithium isotope enrichment device 10 intermittently applies a voltage between both surfaces of the electrolyte membrane 2. Therefore, in the multi-stage lithium isotope enrichment device 20, the voltage application timing for the neighboring electrolyte membranes 2 can be shifted, so that the reactions near the electrodes 31 and 32 are not easily affected during the voltage application between both surfaces of the electrolyte membrane 2.

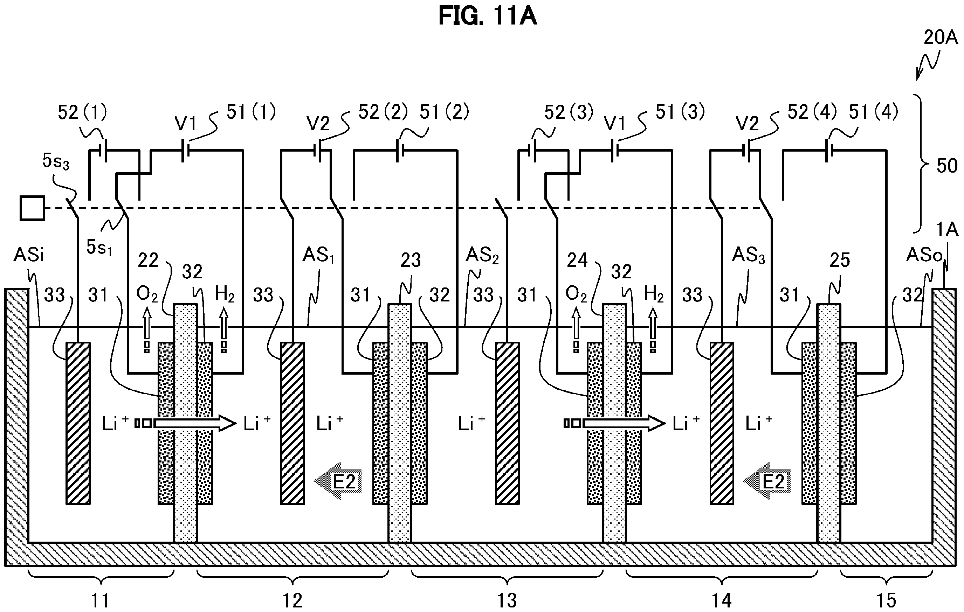

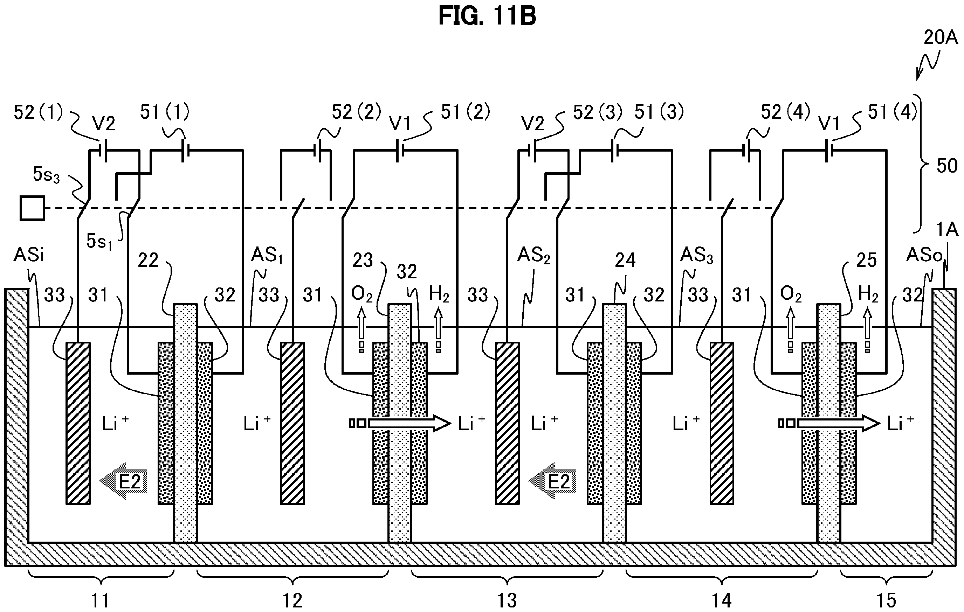

Hereinafter, a multi-stage lithium isotope enrichment device according to a modification of the first embodiment of the present invention will be described with reference to FIGs. 11A and 11B.

A multi-stage lithium isotope enrichment device 20A according to the modification of the first embodiment of the present invention has a structure in which four of the lithium isotope enrichment devices 10 are coupled so that the respective processing tanks 1 are integrated together into a processing tank 1A, as with the multi-stage lithium isotope enrichment device 20 according to the embodiment described above. The multi-stage lithium isotope enrichment device 20A includes a power supply unit 50 including four power supply units 5 (see FIG. 10). The multi-stage lithium isotope enrichment device 20A also includes a stirring device 6 and a cooling device 7 as necessary (not shown), as with the multi-stage lithium isotope enrichment device 20. In this modification, the cooling device 7 is preferably configured to use the processing tank 1A as a jacket tank to circulate a refrigerant.

The power supply unit 50 includes: main power supplies 51 connected between a first electrode 31 and a second electrode 32 on both surfaces of each electrolyte membranes 2; and sub-power supplies 52 connected between a third electrode 33 and the first electrode 31 provided facing each other in the same chamber of the chambers 11, 12, 13, and 14. The main power supply 51 and the sub-power supply 52 connected to the same first electrode 31 alternately apply voltages. That is, the power supply unit 50 includes the four power supply units 5 (see FIG. 10) . These main power supplies 51 are referred to as the main power supplies 51(1), 51(2), 51(3), and 51(4), respectively, from the supply chamber 11 side, as shown in FIGs. 11A and 11B, when distinguished from each other. Likewise, the sub-power supplies 52 are referred to as the sub-power supplies 52(1), 52 (2), 52 (3), and 52 (4), respectively. Furthermore, the power supply unit 50 is configured so that the main power supplies 51 connected to the electrodes 31 and 32 on both surfaces of the neighboring electrolyte membranes 2 are not driven simultaneously (not connected to the electrodes 31 and 32) . For this purpose, in the power supply unit 50, the power supply units 5 of each of neighboring two or more the lithium isotope enrichment devices 10 coupled are set as a group, and one in order in each group makes $Li^+$ migrate. It is preferable to synchronize one in each group. Here, two power supply units 5 are set as a group. Therefore, the main power supply 51(1) and the main power supply 51(3) are synchronized, and the main power supply 51(2) and the main power supply 51(4) are synchronized. To this end, it is preferable that all the power supply units 5 are set to have the same cycle $t_{CYC}$, the electrodialysis period $t_{ED}$ is set to less than half the cycle $t_{CYC}$ ($t_{ED} < t_{CYC}/2$), and the reset period $t_{RST}$ is set to less than or equal to half the cycle $t_{CYC}$ ($t_{RST} \leq t_{CYC}/2$). As with the multi-stage lithium isotope enrichment device 20, the power supplies 51 and 52 are preferably floating power supplies, or only one of the power supplies 51 and 52 may be grounded in the multi-stage lithium isotope enrichment device 20A.

(Lithium Isotope Enrichment Method Using Multi-Stage Lithium Isotope Enrichment Device)

A lithium isotope enrichment method using the multi-stage lithium isotope enrichment device 20A according to this modification will be described with reference to FIGs. 11A and 11B. This modification is the same as the embodiment described above, except for the application timing of voltages +V1 and -V2 by the power supply unit 50.

As shown in FIG. 11A, the power supply unit 50 disconnects the main power supplies 51(2) and 51(4) while the main power supplies 51(1) and 51(3) are connected. As a result, the voltage +V1 is applied between both surfaces of the electrolyte membranes 22 and 24, respectively. Then, $Li^+$ migrates from the Li-containing aqueous solution ASi in the supply chamber 11 through the electrolyte membrane 22 to the aqueous solution $AS_1$ in the chamber 12, and from the aqueous solution $AS_2$ in the chamber 13 through the electrolyte membrane 24 to the aqueous solution $AS_3$ in the chamber 14, respectively. On the other hand, $Li^+$ does not migrate through the electrolyte membrane 23 (between the aqueous solution $AS_1$ and the aqueous solution $AS_2$) and the electrolyte membrane 25 (between the aqueous solution $AS_3$ and the aqueous solution ASo) . In this event, the sub-power supplies 52(2) and 52(4) can be connected to apply a voltage -V2 between the third electrode 33 and the first electrode 31 in the chambers 12 and 14. As a result, an electric field E2 is generated, as indicated by the arrows with a dot pattern in FIG. 11A, which directed toward the supply side from the surfaces of the electrolyte membranes 23 and 25 (the first electrodes 31) where $Li^+$ is not migrating. $Li^+$ adsorbed on the surfaces of the electrolyte membranes 23 and 25 is thus desorbed (see FIG. 5D).

Next, as shown in FIG. 11B, the power supply unit 50 disconnects the main power supplies 51(1) and 51(3) and the sub-power supplies 52 (2) and 52 (4), and connects the main power supplies 51(2) and 52(4). The voltage +V1 is thus applied between both surfaces of the electrolyte membranes 23 and 25. Then, $Li^+$ migrates from the aqueous solution $AS_1$ in the chamber 12 through the electrolyte membrane 23 to the aqueous solution $AS_2$ in the chamber 13, and from the aqueous solution $AS_3$ in the chamber 14 through the electrolyte membrane 25 to the aqueous solution ASo in the chamber 15. On the other hand, $Li^+$ does not migrate through the electrolyte membrane 22 (between the aqueous solution ASi and the aqueous solution $AS_1$) and the electrolyte membrane 24 (between the aqueous solution $AS_2$ and the aqueous solution $AS_3$). In this event, the sub-power supplies 52(1) and 52(3) can be connected to apply a voltage -V2 between the third electrode 33 and the first electrode 31 in the chambers 11 and 13. As a result, an electric field E2 is generated, as indicated by the arrows with a dot pattern in FIG. 11B, which directed toward the supply side from the surfaces of the electrolyte membranes 22 and 24 (the first electrodes 31) where $Li^+$ is not migrating. $Li^+$ adsorbed on the surfaces of the electrolyte membranes 22 and 24 is thus desorbed (see FIG. 5D).

Next, as shown in FIG. 11A again, the power supply unit 50 disconnects the main power supplies 51(2) and 51(4) and the sub-power supplies 52(1) and 52(3), and connects the main power supplies 51(1) and 51(3) and the sub-power supplies 52(2) and 52 (4) . By thus alternately connecting the main power supplies 51 (1) and 51 (3) and the main power supplies 51(2) and 51(4), $Li^+$ migrates intermittently and alternately through the electrolyte membranes 22 and 24 and the electrolyte membranes 23 and 25. Furthermore, by also alternately connecting the sub-power supplies 52(2) and 52(4) and the sub-power supplies 52(1) and 52(3), $Li^+$ can be quickly desorbed from the surface of the electrolyte membrane 2 through which $Li^+$ was just migrating. As with the embodiment described above, it is preferable that only the power supply unit 5(1) is driven to allow $Li^+$ to migrate through only the electrolyte membrane 22 immediately after the start of operation, and then the power supply units 5(2), 5(3), and 5(4) are additionally driven one by one.

In this modification, the sub-power supply 52 is connected between the third electrode 33 and the first electrode 31 in the chamber on the recovery side of the electrolyte membrane 2 where $Li^+$ is migrating, to apply the voltage -V2. The multi-stage lithium isotope enrichment device 20A according to this modification is designed such that substantially no electric field is generated between the third electrode 33 and the second electrode 32 opposite thereto. Even if an electric field is generated, the multi-stage lithium isotope enrichment device 20A is designed with a space between the second electrode 32 and the third electrode 33 to sufficiently weaken the electric field so as not to inhibit the reaction of Formula (3) near the second electrode 32 by the voltage +V1 applied. Specifically, it is preferable that the third electrode 33 is disposed at a sufficiently short distance from the first electrode 31 in the same chamber, so that the electric field E2 with required strength can be obtained with a small voltage V2. As a result, even when there is no wide space between the second electrode 32 and the third electrode 33, the reaction near the second electrode 32 is not inhibited by the application of the voltage -V2. With such a configuration, the multi-stage lithium isotope enrichment device 20A according to this modification can be reduced in size in the coupling direction of the lithium isotope enrichment devices 10 by reducing the interval between the electrolyte membranes 2.

As with the multi-stage lithium isotope enrichment device 20, the multi-stage lithium isotope enrichment device 20A can also have a configuration in which a plurality of lithium isotope enrichment devices 10B are coupled. To this end, the power supply unit 50 includes a sub-power supply 52B (see FIG. 8) instead of the sub-power supply 52. In this case, while the main power supplies 51 (1) and 51 (3) are connected, for example, the sub-power supplies 52 (2) and 52 (4) are connected with their polarities reversed in the middle. Therefore, it is preferable that the sum of the reset period $t_{RST}$ and the preparation period $t_{PREP}$ is set to less than or equal to half the cycle $t_{CYC}$ ($t_{RST}+t_{PREP} \leq t_{CYC/2}$).

(Second Embodiment)

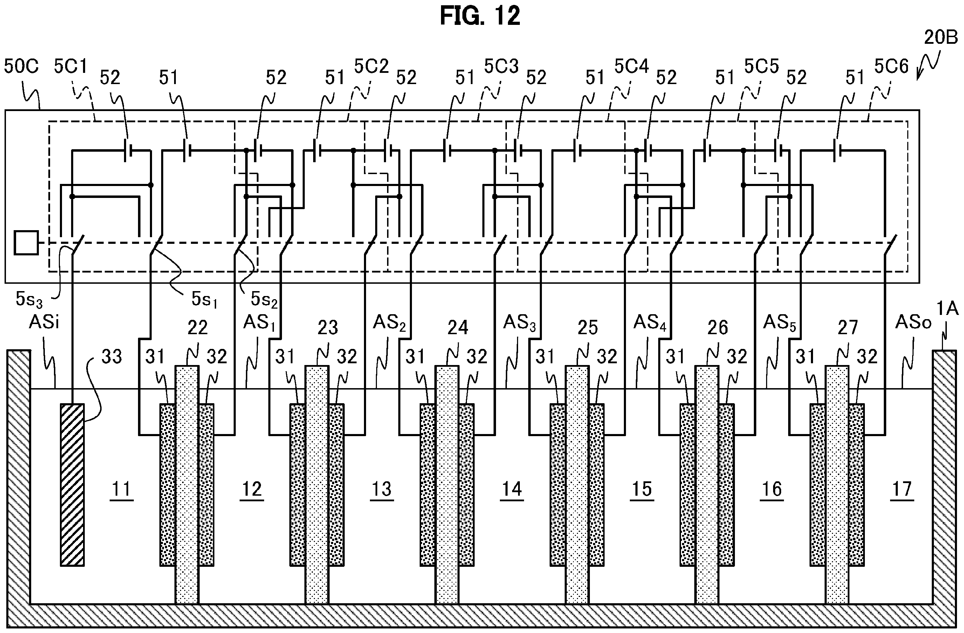

In the multi-stage lithium isotope enrichment device in which the lithium isotope enrichment devices 10 and 10B (see FIGs. 1 and 8) according to the embodiment and its modification are coupled to each other such that the respective processing tanks 1 are integrated into the processing tank 1A, the recovery chamber 12 of one of the neighboring two of the lithium isotope enrichment devices 10 and 10 also serves as the supply chamber 11 of the other, as described above. Furthermore, the third electrode 33 and second electrode 32 provided in each of the supply chamber 11 and recovery chamber 12 thus integrated can be integrated. Hereinafter, a multi-stage lithium isotope enrichment device according to a second embodiment of the present invention will be described with reference to FIG. 12.

A multi-stage lithium isotope enrichment device 20B according to the second embodiment of the present invention includes: a processing tank 1A; six electrolyte membranes (lithium ion-conducting electrolyte membranes) 22, 23, 24, 25, 26, and 27 disposed parallel to each other at intervals so as to partition the processing tank 1A into seven chambers 11, 12, 13, 14, 15, 16, and 17 in one direction; a first electrode 31 and a second electrode 32 (porous electrodes) applied to both surfaces of each of the electrolyte membranes 22, 23, 24, 25, 26, and 27; a third electrode (sub-electrode) 33 disposed facing the first electrode 31 in the chamber 11; and a power supply unit 50C. The multi-stage lithium isotope enrichment device 20B also includes a stirring device (circulator means) 6 and a cooling device 7 if necessary (not shown), as with the multi-stage lithium isotope enrichment device 20. The multi-stage lithium isotope enrichment device 20B has a structure in which six of the lithium isotope enrichment devices 10B are coupled to each other such that the respective processing tanks 1 are integrated into the processing tank 1A. The recovery chamber 12 of one of the neighboring two of the lithium isotope enrichment devices 10B, 10B also serves as the supply chamber 11 of the other. The second electrode 32 in one of the recovery chambers 12 also serves as the third electrode 33 in the other supply chamber 11. Therefore, in the multi-stage lithium isotope enrichment device 20B, the third electrode 33 spaced apart from the electrolyte membrane 22 is provided only in the supply chamber 11 at the end on the supply side. The electrolyte membranes 22, 23, 24, 25, 26, and 27 can each have the same configuration as the electrolyte membrane 2 of the lithium isotope enrichment devices 10 and 10B, and are referred to as the electrolyte membrane 2 as appropriate unless particularly distinguished from each other. Moreover, the cooling device 7 is preferably configured to use the processing tank 1A as a jacket tank to circulate a refrigerant.

As described above, in the multi-stage lithium isotope enrichment device 20B, the second electrode 32 disposed in each of the chambers 12, 13, 14, 15, and 16 also serves as the third electrode 33 in the same chamber. It is therefore preferable that the distance between the electrolyte membranes 2 is short so that the second electrode 32 is disposed as the third electrode 33 close enough to the opposing first electrode 31 to avoid short-circuiting. That is, it is preferable that the chambers 12, 13, 14, 15, and 16, except for the chambers 11 and 17 at both ends, are short in the partition direction of the processing tank 1A (the coupling direction of the lithium isotope enrichment devices 10B). With such a configuration, the multi-stage lithium isotope enrichment device 20B can be reduced in size in the coupling direction while reducing the number of parts.

The power supply unit 50C includes six power supply units 5C1, 5C2, 5C3, 5C4, 5C5, and 5C6, each including a main power supply 51 and a sub-power supply 52, in this order from the supply side. The power supply units 5C1, 5C2, 5C3, 5C4, 5C5, and 5C6 each correspond to the power supply unit 5B of the lithium isotope enrichment device 10B, and are referred to as the power supply unit 5C as appropriate unless particularly distinguished from each other. In the power supply unit 5C, as with the power supply unit 5B, the main power supply 51 and the sub-power supply 52 alternately apply DC voltages, and the sub-power supply 52 reverses the polarity. Specifically, the power supply unit 5C alternately repeats the following steps: a first step of applying a voltage +V1 by connecting positive and negative electrodes of the main power supply 51 to the first electrode 31 and second electrode 32, respectively; a second step of disconnecting the main power supply 51 and applying a voltage -V2 by connecting positive and negative electrodes of the sub-power supply 52 to the first electrode 31 and the third electrode 33 or the second electrode 32 neighboring on the supply side, respectively; and a third step of applying a voltage +V2 by switching and connecting the positive and negative electrodes of the sub-power supply 52. The power supply unit 5C therefore further includes switching elements $5s_1$, $5s_2$, and 5ss to switch connection destinations of the electrodes 31, 32, and 33, respectively. Note, however, that the second electrode 32 of one of the neighboring lithium isotope enrichment devices 10B also serves as the third electrode 33 of the other. Therefore, the switching element $5s_3$ also serves as the switching element $5s_2$ of the power supply unit 5C neighboring on the supply side, except for the power supply unit 5C1. In the multi-stage lithium isotope enrichment device 20B, the power supplies 51 and 52 are preferably floating power supplies, or only one of the power supplies 51 and 52 may be grounded.

In the multi-stage lithium isotope enrichment device 20B, it is preferable that the voltage -V2 is not applied not only in the chamber on the supply side of the electrolyte membrane 2 where $Li^+$ is migrating due to the application of the voltage +V1, but also between the third electrode 33 or the second electrode 32 and the first electrode 31 in the chamber on the recovery side. When a potential gradient occurs in the aqueous solution in the chamber on the recovery side, where the potential near the surface of the electrolyte membrane 2 is positive, the $Li^+$ migration is inhibited, resulting in reduced energy efficiency. In the power supply unit 50C, the power supply units 5C of each of neighboring three or more the lithium isotope enrichment devices 10B coupled are set as a group, and one in order in each group makes $Li^+$ migrate. Here, three power supply units 5C are set as a group and the switching elements $5s_1$, $5s_2$, and $5s_3$ are three-position switching elements to perform connection and disconnection simultaneously.

The switching element $5_{S1}$ is a triple-throw switch that switches the connection destination of the first electrode 31 in three ways: the positive electrode of the main power supply 51, the positive electrode of the sub-power supply 52, and the negative electrode of the sub-power supply 52. The switching element $5_{S2}$ connects and disconnects the second electrode 32 to and from the negative electrode of the main power supply 51. The switching element $5_{S3}$ is a double-throw switch that switches the connection destination of the third electrode 33 in three ways: the positive electrode of the sub-power supply 52, the negative electrode of the sub-power supply 52, and not connected. The switching element $5_{S2}$ that also serves as the switching element $5_{S3}$ is a double-throw switch that switches the connection destination of the second electrode 32 in three ways: the negative electrode of the main power supply 51 and the positive electrode of the sub-power supply 52 of the power supply unit 5C neighboring on the recovery side, the negative electrode of this sub-power supply 52, and not connected.

It is also preferable to synchronize one in each group. Here, three power supply units 5C are set as a group. Therefore, the power supply unit 5C1 and the power supply unit 5C4 are synchronized, the power supply unit 5C2 and the power supply unit 5C5 are synchronized, and the power supply unit 5C3 and the power supply unit 5C6 are synchronized, respectively. All the power supply units 5C are set to have the same cycle $t_{CYC}$, and the electrodialysis period $t_{ED}$, reset period $T_{RST}$, and preparation period $t_{PREP}$ are each set to less than 1/3 of the cycle $t_{CYC}$ ($t_{ED} < t_{CYC}/3$, $t_{RST} < t_{CYC}/3$, $t_{PREP} < t_{CYC}/3$). The power supply units 5C1 and 5C4, the power supply units 5C2 and 5C5, and the power supply units 5C3 and 5C6 are driven so that the electrodialysis periods $t_{ED}$ do not overlap.


(Lithium Isotope Enrichment Method Using Multi-Stage Lithium Isotope Enrichment Device)


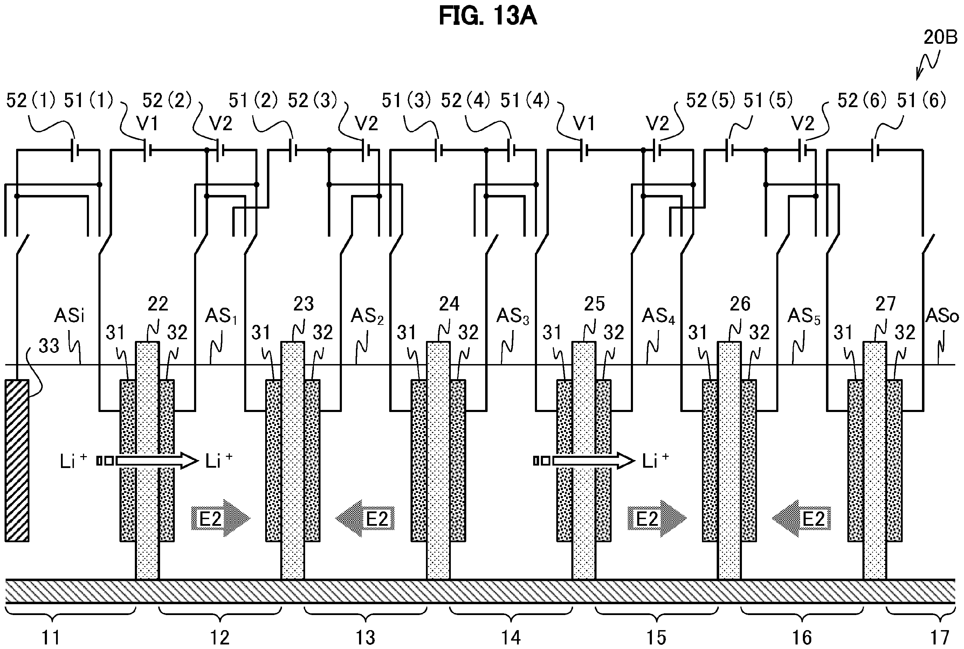

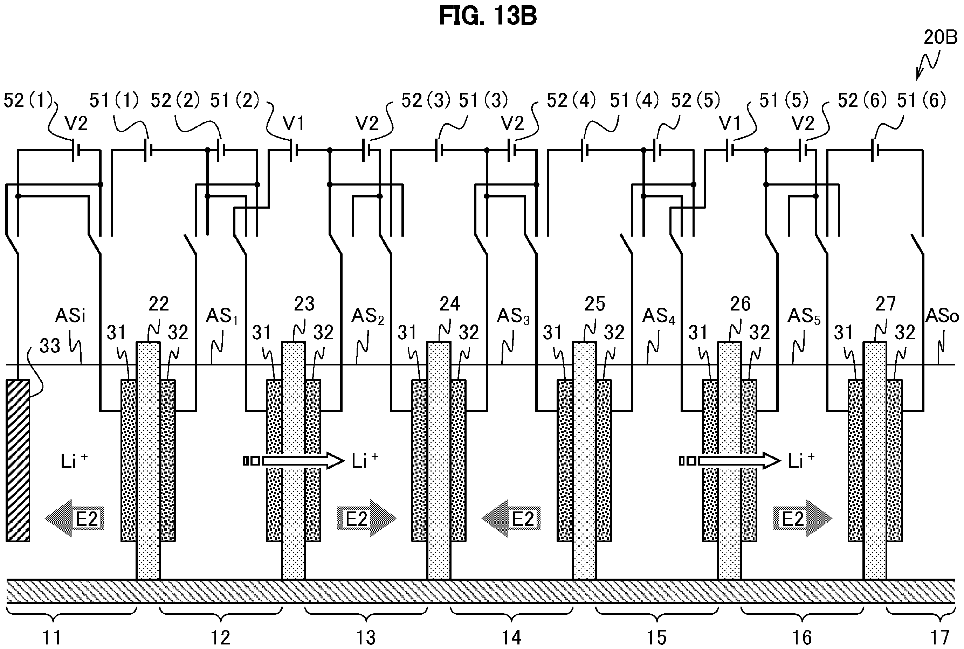

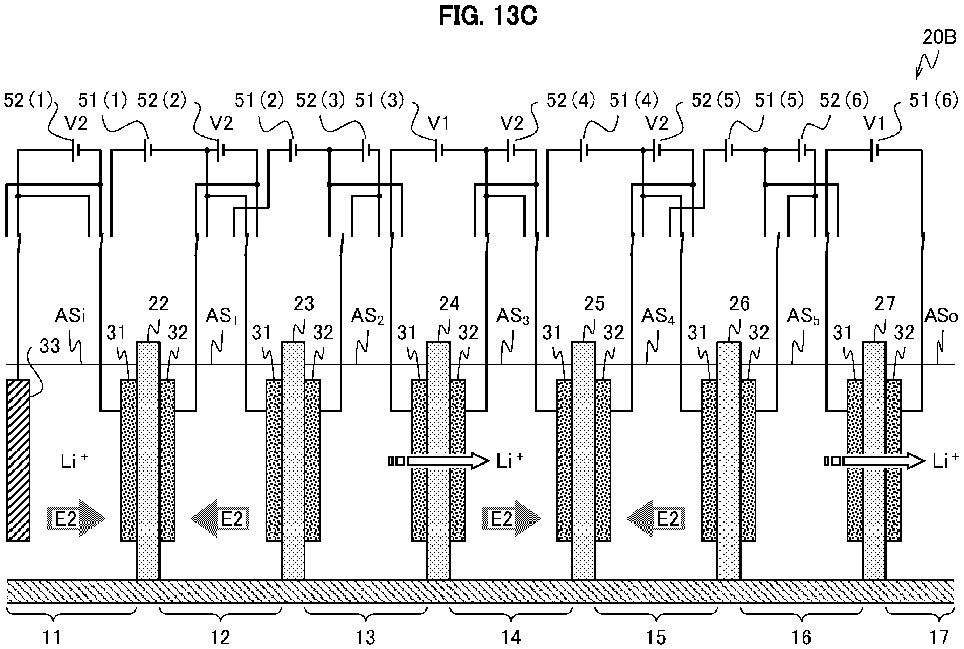

A lithium isotope enrichment method using the multi-stage lithium isotope enrichment device 20B according to this embodiment will be described with reference to FIGs. 13A, 13B, and 13C. In FIGs. 13A, 13B, and 13C, the main power supplies 51 and the sub-power supplies 52 of the power supply units 5C1, 5C2, 5C3, 5C4, 5C5, and 5C6 are referred to as the main power supplies 51(1), 51(2), 51(3), 51(4), 51(5), and 51(6), and the sub-power supplies 52(1), 52(2), 52(3), 52(4), 52(5), and 52(6), respectively.

As shown in FIG. 13A, while the power supply units 5C1 and 5C4 connect the main power supplies 51(1) and 51(4), the other power supply units 5C2, 5C3, 5C5, and 5C6 each disconnect the main power supply 51. As a result, a voltage +V1 is applied between both surfaces of the electrolyte membranes 22 and 25. Then, $O_2$ is generated from the vicinity of the first electrodes 31 applied on the surfaces of the electrolyte membranes 22 and 25, and $H_2$ is generated from the vicinity of the second electrodes 32 applied on the back surfaces (not shown in FIG. 13A, see FIG. 4). Then, $Li^+$ migrates from the Li-containing aqueous solution ASi in the supply chamber 11 through the electrolyte membrane 22 to the aqueous solution $AS_1$ in the chamber 12, and from the aqueous solution $AS_3$ in the chamber 14 through the electrolyte membrane 25 to the aqueous solution of $AS_4$ in the chamber 15, respectively. On the other hand, $Li^+$ does not migrate through the other electrolyte membranes 23, 24, 26, and 27. In this event, a voltage +V2 can be applied between the second electrode 32 and the first electrode 31 in the chambers 12 and 15 on the recovery side of the electrolyte membranes 22 and 25 where $Li^+$ is migrating, by the power supply units 5C2 and 5C5 connecting the sub-power supplies 52(2) and 52(5). As a result, an electric field E2 (electric field +E2) directed toward the recovery side is generated in the aqueous solutions $AS_1$ and $AS_4$, as indicated by the arrows with a dot pattern in FIG. 13A. $Li^+$ migrates along the electric field, and thus $Li^+$ in the aqueous solutions $AS_1$ and $AS_4$ is attracted to the vicinity of the first electrode 31 on the recovery side (near the surfaces of the electrolyte membranes 23 and 26). Meanwhile, $Li^+$ that has migrated through the electrolyte membranes 22 and 25 is quickly separated from the back surfaces (second electrodes 32) of the electrolyte membranes 22 and 25 and migrates to the recovery side in the aqueous solutions $AS_1$ and $AS_4$. As a result, the $Li^+$ concentration near the back surfaces of the electrolyte membranes 22 and 25 decreases, resulting in an increase in concentration gradient with respect to the vicinity of the surfaces. The $Li^+$ mobility is thus increased in the electrolyte membranes 22 and 25.

In this event, a voltage -V2 can be applied between the second electrode 32 and the first electrode 31 in the chambers 13 and 16 by the power supply units 5C3 and 5C6 connecting the sub-power supplies 52(3) and 52(6). As a result, an electric field E2 (electric field -E2) is generated, as indicated by the arrows with a dot pattern in FIG. 13A, which directed toward the supply side from the surfaces (first electrodes 31) of the electrolyte membranes 24 and 27 where $Li^+$ is not migrating. Then, $Li^+$ adsorbed on the surfaces of the electrolyte membranes 24 and 27 is quickly desorbed (see FIG. 5D).

Next, as shown in FIG. 13B, the power supply units 5C1 and 5C4 disconnect the main power supplies 51(1) and 51(4) and connect the sub-power supplies 52(1) and 52(4). The power supply units 5C2 and 5C5 disconnect the sub-power supplies 52 (2) and 52 (5) and connect the main power supplies 51(2) and 51(5) . The power supply units 5C3 and 5C6 reverse the polarities of the sub-power supplies 52 (3) and 52 (6) . As a result, a voltage +V1 is applied between both surfaces of the electrolyte membranes 23 and 26. Then, $O_2$ and $H_2$ are generated from the vicinity of the electrodes 31 and 32 applied on both surfaces of the electrolyte membranes 23 and 26, respectively (not shown in FIG. 13B, see FIG. 4). Then, $Li^+$ migrates from the aqueous solution $AS_1$ in the chamber 12 through the electrolyte membrane 23 to the aqueous solution $AS_2$ in the chamber 13, and from the aqueous solution $AS_4$ in the chamber 15 through the electrolyte membrane 26 to the aqueous solution $AS_5$ in the chamber 16, respectively. On the other hand, $Li^+$ does not migrate through the other electrolyte membranes 22, 24, 25, and 27. In this event, a voltage +V2 is applied between the second electrode 32 and the first electrode 31 in the chambers 13 and 16 on the recovery side of the electrolyte membranes 23 and 26 where $Li^+$ is migrating. This generates an electric field +E2 in the aqueous solutions $AS_2$ and $AS_5$, as indicated by the arrows with a dot pattern in FIG. 13B. The electric field +E2 causes the $Li^+$ unevenly distributed near the second electrode 32 on the supply side in the aqueous solutions $AS_2$ and $AS_5$ by the previous application of the voltage -V2 in the chambers 13 and 16 (see FIG. 13A) to migrate to the recovery side, resulting in a reduction in the $Li^+$ concentration near the back surfaces of the electrolyte membranes 23 and 26. Furthermore, the previous application of the voltage +V2 in the chambers 12 and 15 on the supply side of the electrolyte membranes 23 and 26 (see FIG. 13A) increases the $Li^+$ concentration near the surfaces of the electrolyte membranes 23 and 26 in the aqueous solutions $AS_1$ and $AS_4$. As a result, the $Li^+$ concentration gradient is increased and the $Li^+$ mobility is increased in the electrolyte membranes 23 and 26.

In this event, the voltage -V2 is applied between the third electrode 33 and the first electrode 31 in the chamber 11 on the supply side of the electrolyte membranes 22 and 25 (see FIG. 13A) where $Li^+$ was just migrating, and between the second electrode 32 and the first electrode 31 in the chamber 14. Therefore, an electric field -E2 is generated in the aqueous solutions ASi and $AS_3$, as indicated by the arrows with a dot pattern in FIG. 13B. Then, $Li^+$ adsorbed on the surfaces of the electrolyte membranes 22 and 25 is quickly desorbed (see FIG. 5D) .

Subsequently, as shown in FIG. 13C, the power supply units 5C2 and 5C5 disconnect the main power supplies 51(2) and 51 (5) and connect the sub-power supplies 52 (2) and 52 (5) . The power supply units 5C3 and 5C6 disconnect the sub-power supplies 52 (3) and 52 (6) and connect the main power supplies 51(3) and 51(6) . The power supply units 5C1 and 5C4 also reverse the polarities of the sub-power supplies 52(1) and 52(4). As a result, a voltage +V1 is applied between both surfaces of the electrolyte membranes 24 and 27. Then, $O_2$ and $H_2$ are generated from the vicinity of the electrodes 31 and 32 applied on both surfaces of the electrolyte membranes 24 and 27, respectively (not shown in FIG.

13C, see FIG. 4). Then, Li$^+$ migrates from the aqueous solution AS$_2$ in the chamber 13 through the electrolyte membrane 24 to the aqueous solution AS$_3$ in the chamber 14, and from the aqueous solution AS$_5$ in the chamber 16 through the electrolyte membrane 27 to the aqueous solution ASo in the chamber 17. On the other hand, Li+ does not migrate through the other electrolyte membranes 22, 23, 25, and 26. In this event, a voltage +V2 is applied between the third electrode 33 and the first electrode 31 in the chamber 11 and between the second electrode 32 and the first electrode 31 in the chamber 14 on the recovery side of the electrolyte membrane 24 where Li$^+$ is migrating. This generates an electric field +E2 in the aqueous solutions ASi and AS$_3$ as indicated by the arrows with a dot pattern in FIG. 13C. The electric field +E2 causes the Li$^+$ unevenly distributed near the electrodes 33 and 32 on the supply side in the aqueous solutions ASi and AS$_3$ by the previous application of the voltage -V2 in the chambers 11 and 14 (see FIG. 13B) to migrate to the recovery side. Furthermore, the previous application of the voltage +V2 in the chambers 13 and 16 on the supply side of the electrolyte membranes 24 and 27 (see FIG. 13B) increases the Li$^+$ concentration near the surfaces of the electrolyte membranes 24 and 27 in the aqueous solutions AS$_2$ and AS$_5$. As a result, the Li$^+$ concentration gradient is increased and the Li$^+$ mobility is increased in the electrolyte membranes 24 and 27.

In this event, the voltage -V2 is applied between the second electrode 32 and the first electrode 31 in the chambers 12 and 15 on the recovery side of the electrolyte membranes 23 and 26 (see FIG. 13B) where Li$^+$ was just migrating. This generates an electric field -E2 in the aqueous solutions AS$_1$ and AS$_4$, as indicated by the arrows with a dot pattern in FIG. 13C. Then, Li$^+$ adsorbed on the surfaces of the electrolyte membranes 23 and 26 is quickly desorbed (see FIG. 5D).

Further, as shown in FIG. 13A, again, the power supply units 5C3 and 5C6 disconnect the main power supplies 51(3) and 51(6) and connect the sub-power supplies 52 (3) and 52 (6) . The power supply units 5C1 and 5C4 disconnect the sub-power supplies 52(1) and 52(4) and connect the main power supplies 51(1) and 51(4). Further, the power supply units 5C2 and 5C5 reverse the polarities of the sub-power supplies 52(2) and 52(5). In the multi-stage lithium isotope enrichment device 20C, the power supply units 5C1 and 5C4, the power supply units 5C2 and 5C5, and the power supply units 5C3 and 5C6 alternately switch the connection and disconnection of the power supplies 51 and 52. As a result, the voltage +V1 is intermittently and alternately applied between both surfaces of each electrolyte membrane 2. In the chamber on the supply side of the electrolyte membrane 2, the voltage -V2 is applied after the application of the voltage +V1 is stopped, thus quickly desorbing the Li$^+$ adsorbed on the surface of the electrolyte membrane 2. Meanwhile, the voltage +V2 is applied before the next application of the voltage +V1, thus attracting the desorbed Li$^+$ to the surface of the electrolyte membrane 2 and increasing the concentration. Therefore, the multi-stage lithium isotope enrichment device 20C is a compact device that is reduced in size in the partition direction of the processing tank 1A, and is capable of recovering Li with a high $^6$Li isotope ratio from the recovery chamber 17 in a time efficient manner.

In the multi-stage lithium isotope enrichment device 20B, as with the multi-stage lithium isotope enrichment device 20, the lithium isotope enrichment devices 10B may be coupled with one to two or more 90° bends, with neighboring electrolyte membranes 2 and 2 disposed perpendicularly to each other at the bends. In a chamber at the bend partitioned by electrolyte membranes 2 and 2 disposed perpendicularly to each other, the second electrode 32 does not also serve as the third electrode 33, that is, the third electrode 33 is disposed in addition to the electrodes 31 and 32. The third electrode 33 is disposed parallel to and close to the first electrode 31 applied on the surface of the electrolyte membrane 2 on the recovery side.

(Modification)

The multi-stage lithium isotope enrichment device 20B may have a configuration in which a plurality of lithium isotope enrichment devices 10 are coupled. In this case, instead of the sub-power supply 52 applying the voltage +V2 (third step), a period in which no voltage is applied between the third electrode 33 or the second electrode 32 and the first electrode 31 in the same chamber (application stop period) is provided.

[Second Embodiment]

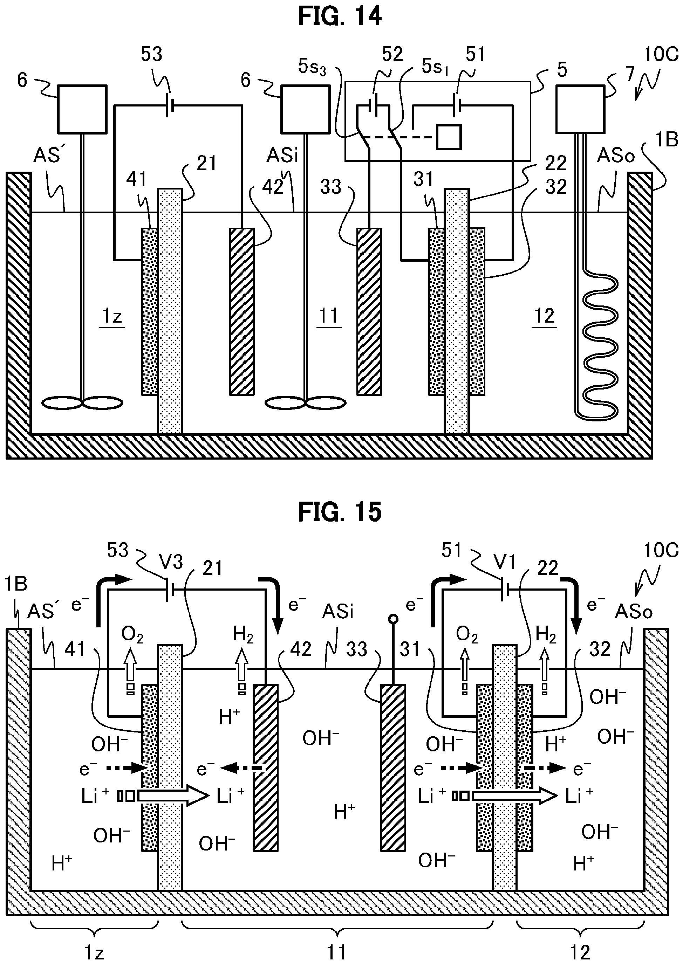

As described in the first embodiment, it is preferable that the Li$^+$ concentration in the Li-containing aqueous solution ASi is maintained high during operation. Therefore, in addition to replacing the Li-containing aqueous solution ASi in the supply chamber 11 or circulating it to the outside of the processing tank 1, the following configuration is employed to maintain the Li$^+$ concentration in the Li-containing aqueous solution ASi with good workability and without significantly increasing the device size. Hereinafter, a lithium isotope enrichment device according to a second embodiment of the present invention will be described with reference to FIG. 14.

(Lithium Isotope Enrichment Device)

A lithium isotope enrichment device 10C according to the second embodiment of the present invention includes:

a processing tank 1B; an electrolyte membrane (lithium ion-conducting electrolyte membrane for lithium replenishment) 21; an electrolyte membrane (lithium ion-conducting electrolyte membrane) 22; a first electrode (porous electrode) 31; a second electrode (porous electrode) 32; a third electrode (sub-electrode) 33; a fourth electrode (first electrode for lithium replenishment) 41; a fifth electrode (second electrode for lithium replenishment) 42; a power supply unit 5 including a main power supply 51 and a sub-power supply 52; a power supply (lithium replenishment power supply) 53; a stirring device (circulator means) 6; and a cooling device 7. The processing tank 1B is partitioned by the electrolyte membranes 21 and 22 into three chambers: a replenishment chamber (lithium replenishment chamber) 1z that stores the Li-containing aqueous solution AS', a supply chamber (first chamber) 11 that stores a Li-containing aqueous solution ASi, and a recovery chamber (second chamber) 12 that stores a $^6$Li recovery aqueous solution ASo. The lithium isotope enrichment device 10C differs from the lithium isotope enrichment device 10 according to the first embodiment (see FIG. 1) in further including the electrolyte membrane 21 that partitions the processing tank 1B on the supply chamber 11 side of the electrolyte membrane 22, the electrodes 41 and 42 provided in each of the replenishment chamber 1z, which is separated from the supply chamber 11 by the electrolyte membrane 21, and the supply chamber 11, and the power supply 53 connected between the electrodes 41 and 42. The other configuration is the same as that of the lithium isotope enrichment device 10 according to the first embodiment. The lithium isotope enrichment device 10C may also include a liquid level sensor, exhaust means, and the like, as necessary.

As with the lithium isotope enrichment device 10, the portion of the lithium isotope enrichment device 10C, including the replenishment chamber 1z, the supply chamber 11, the electrolyte membrane 21 that partitions these chambers, the electrodes 41 and 42, and the power supply 53 is a lithium recovery device using a lithium recovery method using a lithium ion-conducting electrolyte membrane (for example, Patent Literatures 2 and 3). This lithium recovery device allows Li$^+$ to migrate from a Li-containing aqueous solution AS' accommodated in the replenishment chamber 1z to the Li-containing aqueous solution ASi accommodated in the supply chamber 11. That is, the lithium isotope enrichment device 10C according to this embodiment is a cascade-structured device in which the lithium recovery device and the lithium isotope enrichment device 10 according to the first embodiment are coupled by integrating their respective processing tanks with the supply chamber 11.

The electrolyte membrane 22 has the same configuration as the electrolyte membrane 2 in the lithium isotope enrichment device 10 according to the above embodiment. The electrolyte membrane 21 can also have the same configuration as the electrolyte membrane 22.

The fourth electrode 41 and the fifth electrode 42 are electrodes paired up to apply a voltage between both surfaces of the electrolyte membrane 21. The fourth electrode 41 is provided in the replenishment chamber 1z in contact with or facing the electrolyte membrane 21. The fifth electrode 42 is provided in the supply chamber 11 in contact with or facing the electrolyte membrane 21. It is preferable that one or both of the fourth electrode 41 and the fifth electrode 42 have a porous structure and are in contact with the electrolyte membrane 21. It is more preferable that one of the fourth electrode 41 and the fifth electrode 42 is in contact with the electrolyte membrane 21. It is further preferable that the fourth electrode 41 is in contact with the electrolyte membrane 21 as shown in FIG. 14 (see Patent Literature 3). At least one of the electrodes 41 and 42 being in contact with the electrolyte membrane 21 enables a voltage to be applied to a wide range of the electrolyte membrane 21. Since one of the electrodes 41 and 42 is in contact with the electrolyte membrane 21 and the other is separated, even if a voltage V3 applied by the power supply 53 connected between the electrodes 41 and 42 is somewhat large, a potential difference between both surfaces of the electrolyte membrane 21 is suppressed. This makes it possible to suppress a decrease in energy efficiency of Li$^+$ migration in the electrolyte membrane 21, as will be described later.

As described above, the fourth electrode 41 is provided in contact with the surface (front surface) of the electrolyte membrane 21 on the replenishment chamber 1z side, and applies a voltage to a wide range of the electrolyte membrane 21. The fourth electrode 41 has a porous structure such as a net, as with the electrodes 31 and 32, so that the Li-containing aqueous solution AS' comes into contact with a sufficient area of the surface of the electrolyte membrane 21. The fourth electrode 41 is formed of an electrode material that has electronic conductivity and is stable even when a voltage is applied in the Li-containing aqueous solution AS', and that also preferably has catalytic activity for the reaction of Formula (1) below and the reaction of Formula (2) below, as with the first electrode 31. The electrode material for the fourth electrode 41 is preferably a material that can be easily processed into the shape described above. The fourth electrode 41 is preferably made of platinum (Pt), for example.

[Chem. 3]

$$2OH^- \rightarrow H_2O + \frac{1}{2}O_2 \uparrow + 2e^- \quad \cdots (1)$$

$$Li^+ \rightarrow Li^+(electrolyte) \qquad \cdots (2)$$

The fifth electrode 42 is disposed in the supply chamber 11 so as not to come into contact with the electrolyte membrane 21. The fifth electrode 42 is preferably at a short distance from the electrolyte membrane 21, on the other hand, and is preferably disposed parallel to the electrolyte membrane 21. As with the third electrode 33, the fifth electrode 42 preferably has a shape such as a net, through which the aqueous solution passes, so that the contact area with the Li-containing aqueous solution ASi is increased and the Li-containing aqueous solution ASi in contact with the surface of the electrolyte membrane 21 in the supply chamber 11 is continuously replaced. The fifth electrode 42 is formed of an electrode material that has electronic conductivity and is stable even when a voltage is applied in the Li-containing aqueous solution ASi, and that also preferably has catalytic activity for the reaction of Formula (3) below. Such an electrode material is preferably platinum (Pt), for example. Alternatively, the fifth electrode 42 may be made of carbon (C), copper (Cu), or stainless steel, which is stable at a potential lower than the potential at which the reaction of Formula (3) below occurs. The fifth electrode 42 is, more preferably, made of a material carrying Pt fine particles on the surface of such materials, which function as a catalyst. As with the fourth electrode 41, the fifth electrode 42 may have a porous structure and be provided in contact with the electrolyte membrane 21.

[Chem. 4]

$$2H_2O + 2e^- \rightarrow 2H^- + H_2\uparrow \qquad (3)$$

Furthermore, in the lithium isotope enrichment device 10C, the fifth electrode 42, the third electrode 33, and the first electrode 31 are disposed in one supply chamber 11. The supply chamber 11 is designed to have a sufficient length in the partition direction (between the electrolyte membranes 21 and 22) so that the fifth electrode 42, the third electrode 33, and the first electrode 31 are disposed with a sufficient distance from each other. Specifically, even if the first electrode 31 is connected to the main power supply 51, or the electrodes 33 and 31 are connected to the sub-power supply 52, and the fifth electrode 42 is connected to the power supply 53, respectively, an electric field is substantially prevented from being generated between the fifth electrode 42 and the first electrode 31 or the third electrode 33. Even if an electric field is generated, the lithium isotope enrichment device 10C is designed to sufficiently weaken the electric field so as not to inhibit the reaction in the vicinity of the fifth electrode 42 and the first electrode 31.

The power supply 53 is a DC power supply, as with the main power supply 51, and has a positive electrode connected to the fourth electrode 41 and a negative electrode connected to the fifth electrode 42 to apply a positive voltage V3 (voltage +V3), with respect to the fifth electrode 42, to the fourth electrode 41. The power supply 53 may be a variable power supply so that $Li^+$ mobility in the electrolyte membrane 21 can be adjusted.

The stirring device 6 circulates the Li-containing aqueous solution ASi in the supply chamber 11, as in the first embodiment. The lithium isotope enrichment device 10C may further include a stirring device 6 in the replenishment chamber 1z to circulate the Li-containing aqueous solution AS', or may further include a stirring device 6 in the recovery chamber 12 to circulate the $^6Li$ recovery aqueous solution ASo. In the case where the cooling device 7 is provided in the lithium isotope enrichment device 10C, it is preferable not to cool the electrolyte membrane 21 in order not to reduce the $Li^+$ mobility in the electrolyte membrane 21. Therefore, the cooling device 7 is of a throw-in type, for example, as shown in FIG. 14, and a refrigerant pipe is immersed in the $^6Li$ recovery aqueous solution ASo in the recovery chamber 12 and is installed facing the electrolyte membrane 22.

The Li-containing aqueous solution AS' is a Li source that supplies Li to the Li-containing aqueous solution ASi to maintain its $Li^+$ concentration high during operation of the lithium isotope enrichment device 10C. The Li-containing aqueous solution AS' is an aqueous solution containing $^7Li$ and $^6Li$ cations $^7Li^+$ and $^6Li^+$ in their natural abundance ratios. As with the Li-containing aqueous solution ASi, the Li-containing aqueous solution AS' is a lithium hydroxide (LiOH) aqueous solution, for example. Since a low $Li^+$ concentration reduces the $Li^+$ mobility in the electrolyte membrane 21, the Li-containing aqueous solution AS' preferably has a higher $Li^+$ concentration at the start of operation of the lithium isotope enrichment device 10C. The Li-containing aqueous solution AS' is more preferably a saturated aqueous solution or a supersaturated aqueous solution of $Li^+$. As in the first embodiment, the Li-containing aqueous solution ASi and the $^6Li$ recovery aqueous solution ASo are, for example, a saturated LiOH saturated aqueous solution or supersaturated aqueous solution, and pure water at the start of operation of the lithium isotope enrichment device 10C.

(Lithium Isotope Enrichment Method)

A lithium isotope enrichment method using the lithium isotope enrichment device according to the second embodiment of the present invention will be described with reference to FIG. 15. FIG. 15 omits the stirring device 6 and the cooling device 7. In the lithium isotope enrichment device 10C according to this embodiment, the $Li^+$ migration from the Li-containing aqueous solution ASi in the supply chamber 11 to the $^6Li$ recovery aqueous solution ASo in the recovery chamber 12 is the same as in the first embodiment (see FIGs. 4 and 5A to 5D). Furthermore, the $Li^+$ migration from the Li-containing aqueous solution AS' in the replenishment chamber 1z to the Li-containing aqueous solution ASi in the supply chamber 11 is the same as the $Li^+$ migration from the Li-containing aqueous solution ASi to the $^6Li$ recovery

aqueous solution ASo due to the application of the voltage +V1.

That is, as shown in FIG. 15, in the lithium isotope enrichment device 10C, the power supply 53 applies a positive voltage V3 (voltage +V3), with respect to the fifth electrode 42, to the fourth electrode 41. Then, in the vicinity of the fourth electrode 41, OH$^-$ in the Li-containing aqueous solution AS' causes the reaction of Formula (1) below, releasing electrons e$^-$ to the fourth electrode 41 to generate $H_2O$ and $O_2$ and causing OH$^-$ to decrease. In the Li-containing aqueous solution AS', to maintain charge balance as OH$^-$ decreases, the reaction of Formula (2) below where Li$^+$ dissolves in the electrolyte membrane 21 occurs on the surface of the electrolyte membrane 21, that is, near the fourth electrode 41. In the vicinity of the fifth electrode 42, on the other hand, $H_2O$ in the Li-containing aqueous solution ASi is supplied with electrons e$^-$, thus causing the reaction of Formula (3) below to generate $H_2$ and OH$^-$. Then, as OH$^-$ increases, the reaction of Formula (4) below that causes Li$^+$ in the electrolyte membrane 21 to migrate occurs near the back surface of the electrolyte membrane 21 to maintain the charge balance. As a result, due to the electrochemical potential difference of Li$^+$ contained in the Li-containing aqueous solution AS', the electrolyte membrane 21, and the Li-containing aqueous solution ASi near the electrolyte membrane 21, Li$^+$ migrates from the Li-containing aqueous solution AS' through the electrolyte membrane 21 to the Li-containing aqueous solution ASi.

[Chem. 5]

$$2OH^- \rightarrow H_2O + \frac{1}{2}O_2 \uparrow + 2e^- \quad \cdots (1)$$

$$Li^+ \rightarrow Li^+(electrolyte) \qquad \cdots (2)$$

$$2H_2O + 2e^- \rightarrow 2OH^- + H_2 \uparrow \quad \cdots (3)$$

$$Li^+(electrolyte) \rightarrow Li^+ \qquad \cdots (4)$$

From the reaction of Formula (2) to the reaction of Formula (4), that is, infiltration of Li$^+$ in the Li-containing aqueous solution AS' from the surface of the electrolyte membrane 21, Li$^+$ migration in the electrolyte membrane 21, and the migration of Li$^+$ in the electrolyte membrane 21 to the Li-containing aqueous solution ASi is the same as the migration of Li$^+$ in the Li-containing aqueous solution ASi to the $^6$Li recovery aqueous solution ASo through the electrolyte membrane 22 (electrolyte membrane 2), and is as described in the first embodiment.

Since the larger the voltage V3, the higher the Li$^+$ mobility in the electrolyte membrane 21 (see FIG. 7), it is preferable to set the voltage V3 according to the Li$^+$ mobility in the electrolyte membrane 22. In addition, since the power supply 53 can be continuously energized, the migration amount for a given period of time can be increased in the Li$^+$ migration from the Li-containing aqueous solution AS' to the Li-containing aqueous solution ASi, compared to the Li$^+$ migration from the Li-containing aqueous solution ASi to the $^6$Li recovery aqueous solution ASo by the intermittent energization of the main power supply 51. As shown in FIG. 15, while the lithium isotope enrichment device 10C is in operation (while the main power supply 51 is driven), the power supply 53 may be constantly driven to continuously replenish the Li-containing aqueous solution ASi with Li$^+$. Alternatively, the power supply 53 may be driven for a short time every fixed period. By applying a large voltage V3, Li$^+$ can rapidly migrate to the Li-containing aqueous solution ASi.

Here, when the voltage V3 is large and the potential difference between both surfaces is larger than or equal to a voltage that causes some of the transition metal ions in the electrolyte membrane 21 to be reduced (for example, when the electrolyte membrane 21 is LLTO, $Ti^{4+} + e^- \rightarrow Ti^{3+}$), the electrolyte membrane 21 exhibits electron conductivity. Then, the electrons e$^-$ conducting through the electrolyte membrane 21 generate Joule heat, rapidly reducing the energy efficiency in Li$^+$ migration. Even when the voltage V3 is further increased, the Li$^+$ mobility does not increase by the amount of increase. Specifically, depending on the electron conductivity of the electrolyte membrane 21 and the electrode performance that determines the electrode reaction overvoltage, when a voltage of more than 2.0 V is applied with a potential difference between both surfaces, the electrolyte membrane 21 can exhibit the electron conductivity. In the lithium isotope enrichment device 10C, one of the electrodes 41 and 42 sandwiching the electrolyte membrane 21 from both sides is disposed apart from the electrolyte membrane 21. Therefore, even if the voltage V3 is increased to a certain level, the potential difference between both surfaces of the electrolyte membrane 21 does not easily reach the above voltage. However, the potential difference reaches the above voltage when the voltage V3 is further increased. It is thus preferable to set the voltage V3 to such a voltage or less.

With the lithium isotope enrichment device 10C according to this embodiment, the Li-containing aqueous solution ASi is constantly or periodically replenished with Li$^+$ whose $^6$Li isotope ratio is the natural ratio. This makes it possible to maintain high concentration and reduce the rate of decrease in the $^6$Li isotope ratio of Li$^+$ in the Li-containing aqueous solution ASi. Thus, long-term continuous operation is possible without circulating the Li-containing aqueous solution ASi with the outside. However, when the operation is extended to a certain period or more, the large amount of $^7Li^+$ remaining in the Li-containing aqueous solution ASi significantly reduces the $^6Li$ isotope ratio, compared to the natural ratio, and also reduces the $Li^+$ concentration in the Li-containing aqueous solution AS'. As a result, the $Li^+$ mobility in the electrolyte membrane 21 relative to the voltage V3 decreases, resulting in reduced energy efficiency. Therefore, it is preferable to replace the Li-containing aqueous solutions AS' and ASi in the replenishment chamber 1z and the supply chamber 11.

(First Modification)

The lithium isotope enrichment device 10C according to this embodiment replenishes the Li-containing aqueous solution ASi with $Li^+$ using a known lithium recovery method. Therefore, $Li^+$ to be supplemented to the Li-containing aqueous solution ASi can also be recovered from seawater or the like. However, in an aqueous solution with a low $Li^+$ concentration such as seawater, $Li^+$ mobility is rate-limited by the diffusion of $Li^+$ to the surface of the electrolyte membrane 21, making it difficult to increase with respect to the voltage V3, and resulting in low energy efficiency. Furthermore, chloride ions contained in seawater deteriorate the catalytic activity of the fourth electrode 41 and are also adsorbed on the surface of the electrolyte membrane 21, resulting in a decrease in $Li^+$ mobility. Therefore, to efficiently replenish $Li^+$ from an aqueous solution containing $Li^+$ at low concentration, the following configuration is employed.

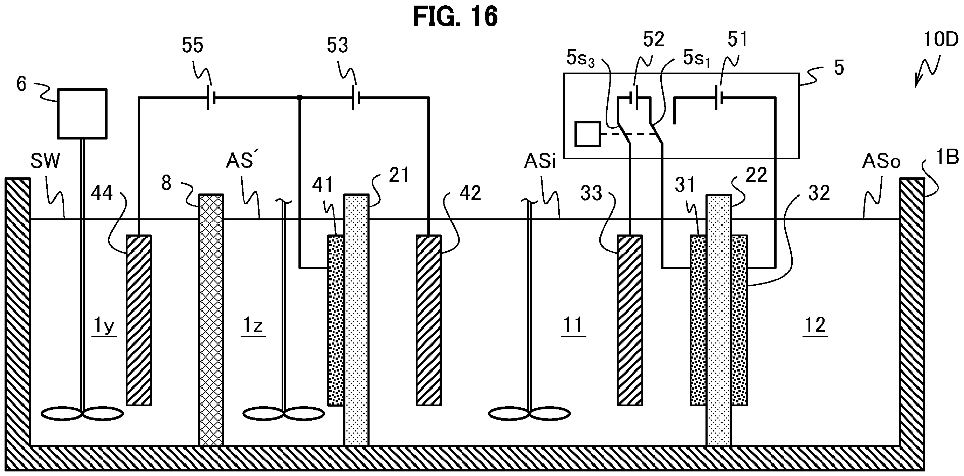

As shown in FIG. 16, a lithium isotope enrichment device 10D according to the first modification of the second embodiment of the present invention includes: a processing tank 1B; an electrolyte membrane (lithium ion-conducting electrolyte membrane for lithium replenishment) 21; an electrolyte membrane (lithium ion-conducting electrolyte membrane) 22; a first electrode (porous electrode) 31; a second electrode (porous electrode) 32; a third electrode (sub-electrode) 33; a fourth electrode (first electrode for lithium replenishment) 41; a fifth electrode (second electrode for lithium replenishment) 42; a sixth electrode 44; a power supply unit 5 including a main power supply 51 and a sub-power supply 52; a power supply (lithium replenishment power supply) 53; a power supply 55; an ion exchange membrane 8; and a stirring device (circulator means) 6. The processing tank 1B is partitioned by the ion exchange membrane 8 and the electrolyte membranes 21 and 22 into four chambers: a raw material chamber 1y that stores a Li-containing aqueous solution SW, a replenishment chamber (lithium replenishment chamber) 1z that stores a Li-containing aqueous solution AS', a supply chamber (first chamber) 11 that stores a Li-containing aqueous solution ASi, and a recovery chamber (second chamber) 12 that stores a $^6Li$ recovery aqueous solution ASo. The lithium isotope enrichment device 10D differs from the lithium isotope enrichment device 10C according to the second embodiment (see FIG. 14) in further including the ion exchange membrane 8 that partitions the processing tank 1B on the replenishment chamber 1z side of the electrolyte membrane 21, the sixth electrode 44 provided in the raw material chamber 1y separated from the replenishment chamber 1z by the exchange membrane 8, and the power supply 55 connected between the electrodes 44 and 41. In the lithium isotope enrichment device 10D, the fourth electrode 41 is provided in contact with the surface of the electrolyte membrane 21 on the replenishment chamber 1z side. The other configuration is the same as that of the lithium isotope enrichment device 10C according to the above embodiment. The lithium isotope enrichment device 10D may also include a cooling device 7, a liquid level sensor, exhaust means, and the like, as necessary.

The ion exchange membrane 8 conducts cations including at least $Li^+$. This prevents the Li-containing aqueous solution AS' in the replenishment chamber 1z from containing anions such as $Cl^-$. The ion exchange membrane 8 can be a cation exchange membrane that passes cations and blocks anions, a monovalent cation permselective ion exchange membrane that passes monovalent cations only, such as $Li^+$, $K^+$, and $Na^+$, a bipolar monovalent ion permselective ion exchange membrane that passes monovalent ions, or the like. Known ion exchange membranes can be used. For example, SELEMION (registered trademark) CMV (manufactured by AGC Engineering Co., Ltd.) or NEOSEPTA CSE (manufactured by Astom Co., Ltd.) can be used as the cation exchange membrane. SELEMION (registered trademark) CSO (manufactured by AGC Engineering Co., Ltd.) can be used as the monovalent cation permselective ion exchange membrane. NEOSEPTA CIMS (manufactured by Astom Co., Ltd.) can be used as the bipolar monovalent ion permselective ion exchange membrane. In the lithium isotope enrichment device 10D, the distance between the sixth electrode 44 and the fourth electrode 41 is preferably short, and thus the ion exchange membrane 8 is preferably disposed at a short distance from the electrolyte membrane 21 (fourth electrode 41). Therefore, the replenishment chamber 1z is preferably short in the partition direction of the processing tank 1B.

The sixth electrode 44 is an electrode that is paired with the fourth electrode 41 to allow cations including $Li^+$ in the Li-containing aqueous solution SW to migrate to the Li-containing aqueous solution AS', and that also sets the surface of the electrolyte membrane 21 to have a relatively low potential in the Li-containing aqueous solution AS'. The sixth electrode 44 is preferably disposed parallel to the fourth electrode 41 in the raw material chamber 1y, and is preferably disposed at a short distance from the fourth electrode 41 across the ion exchange membrane 8. Moreover, the sixth electrode 44 preferably has a shape such as a net so as to increase the contact area with the Li-containing aqueous solution SW. The sixth electrode 44 is formed of an electrode material that has electronic conductivity and is stable even when a voltage is applied to the Li-containing aqueous solution SW, and that also preferably has a catalytic activity for the reaction of Formula (1) below. When the Li-containing aqueous solution SW contains halide ions, the sixth electrode 44 is preferably made of a material that has catalytic activity for the oxidation reaction, for example, the reaction of Formula (12) below in the case of chloride ions ($Cl^-$). Such an electrode material for the sixth electrode 44 is preferably, for example, carbon (C), platinum (Pt), or carbon carrying platinum fine particles as a catalyst.

[Chem. 6]

$$2OH^- \rightarrow H_2O + \frac{1}{2}O_2 \uparrow + 2e^- \quad \cdots (1)$$

$$2Cl^- \rightarrow Cl_2 \uparrow + 2e^- \quad \cdots (12)$$

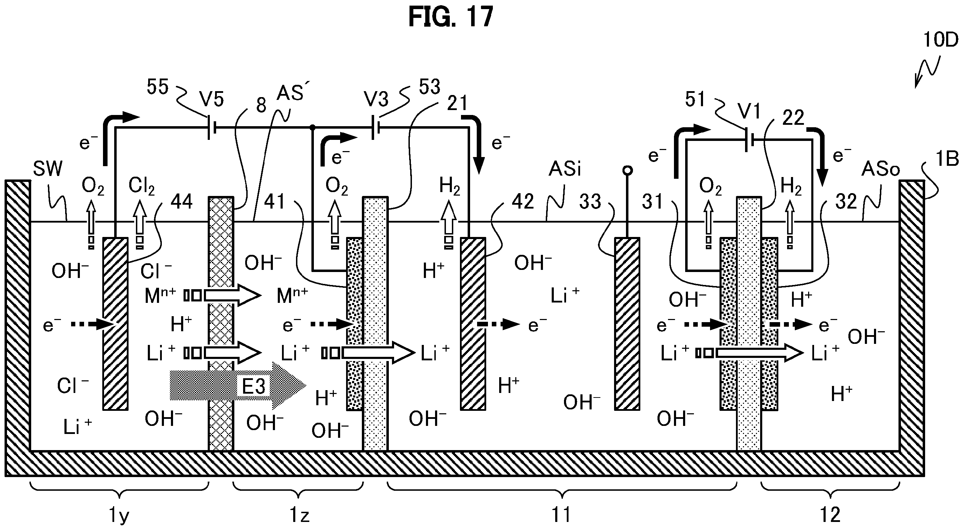

The power supply 55 is a DC power supply, as with the power supply 53, and has a positive electrode connected to the sixth electrode 44 and a negative electrode connected to the fourth electrode 41. That is, the power supply 55 is connected in series to the positive electrode of the power supply 53. The power supply 55 applies a voltage V5 to generate an electric field E3 (see FIG. 17) in the Li-containing aqueous solutions SW and AS'. This causes cations including $Li^+$ in the Li-containing aqueous solution SW to migrate to the Li-containing aqueous solution AS'. Furthermore, the surface of the electrolyte membrane 21 is set to a relatively low potential in the Li-containing aqueous solution AS', and $Li^+$ is unevenly distributed by electrostatic attraction. The power supply 53 and the power supply 55 are preferably configured to be turned on and off independently of each other.

The Li-containing aqueous solution SW is a Li source that supplies Li to the Li-containing aqueous solution ASi through the Li-containing aqueous solution AS', in order to maintain its $Li^+$ concentration high during operation of the lithium isotope enrichment device 10D. The Li-containing aqueous solution SW is an aqueous solution containing other metal ions $M^{n+}$ such as $K^+$, $Na^+$, and $Ca^{2+}$, in addition to lithium ions $Li^+$. Examples of such aqueous solutions include seawater, waste brine after extracting salt from seawater, groundwater such as hot spring water, and an aqueous solution prepared by crushing a waste lithium-ion battery, dissolving it in acid, and then adjusting the pH. The Li-containing aqueous solution AS' is an aqueous solution containing $^7Li$ and $^6Li$ cations $^7Li^+$ and $^6Li^+$ in their natural abundance ratios, and is a lithium hydroxide (LiOH) aqueous solution, for example, as in the above embodiment. In this modification, the Li-containing aqueous solution AS' may be pure water before the start of operation (isotope enrichment) of the lithium isotope enrichment device 10D. As in the first embodiment, the Li-containing aqueous solution ASi and the $^6Li$ recovery aqueous solution ASo are, for example, a LiOH saturated aqueous solution or supersaturated aqueous solution, and pure water at the start of operation of the lithium isotope enrichment device 10D.

A lithium isotope enrichment method using the lithium isotope enrichment device according to the first modification of the second embodiment of the present invention will be described with reference to FIG. 17. In the lithium isotope enrichment device 10D according to this modification, the replenishment chamber 1z stores pure water as the Li-containing aqueous solution AS'. It is preferable that, the power supply 55 is first driven to move the cations including $Li^+$ from the Li-containing aqueous solution SW stored in the raw material chamber 1y, and once the concentration of $Li^+$ in the Li-containing aqueous solution AS' reaches a certain level, the power supply 53 is further driven. Hereinafter, the $Li^+$ migration from the Li-containing aqueous solution AS' in the replenishment chamber 1z to the Li-containing aqueous solution ASi in the supply chamber 11 will be described. FIG. 17 omits the stirring device 6.

In the lithium isotope enrichment device 10D, the power supplies 55 and 53 connected in series can be considered as one power supply (referred to as the power supply 55-53). The power supply 55-53 applies a positive voltage (V5+V3), with respect to the fifth electrode 42, to the sixth electrode 44. At the same time, the power supply 53 applies a positive voltage V3, with respect to the fifth electrode 42, to the fourth electrode 41. Then, the following reactions occur in the raw material chamber 1y and the replenishment chamber 1z. In the vicinity of the sixth electrode 44 and the fourth electrode 41, $OH^-$ in the Li-containing aqueous solutions SW and AS' causes the reaction of Formula (1) below to release electrons $e^-$ to the sixth electrode 44 and the fourth electrode 41, such as releasing electrons $e^-$ to generate $H_2O$ and $O_2$. When the Li-containing aqueous solution SW contains $Cl^-$, the reaction of Formula (12) further occurs near the sixth electrode 44, releasing electrons $e^-$ to generate $Cl_2$. In the Li-containing aqueous solutions SW and AS', as $OH^-$ and other anions decrease, the reaction of Formula (2) below, where $Li^+$ in the Li-containing aqueous solution AS' migrates into the electrolyte membrane 21, occurs on the surface of the electrolyte membrane 21, that is, near the fourth electrode 41, to maintain charge balance.

[Chem. 7]

$$2OH^- \rightarrow H_2O + \frac{1}{2}O_2 \uparrow + 2e^- \quad \cdots (1)$$

$$2Cl^- \rightarrow Cl_2 \uparrow + 2e^- \quad \cdots (12)$$

$$Li^+ \rightarrow Li^+(electrolyte) \quad \cdots (2)$$

An electric field E3 is generated between the electrodes 44 and 41 in the Li-containing aqueous solutions SW and AS' by the application of the voltage V5 by the power supply 55. A potential gradient is thus formed in the sixth electrode 44, which is higher than the surface of the electrolyte membrane 21 on which the fourth electrode 41 is provided. Therefore, OH$^-$ and Cl$^-$ in the Li-containing aqueous solution SW are attracted to the sixth electrode 44 by electrostatic attraction. On the other hand, cations including Li$^+$ in the Li-containing aqueous solution SW migrate along the electric field E3 and are attracted to the surface of the electrolyte membrane 21 through the ion exchange membrane 8.

In the supply chamber 11, the following reaction occurs as in the above embodiment. In the vicinity of the fifth electrode 42, H$_2$O in the Li-containing aqueous solution ASi is supplied with electrons e$^-$ to cause the reaction of Formula (3) below and generate H$_2$ and OH$^-$. Then, as OH$^-$ increases, the reaction of Formula (4) below occurs in the vicinity of the electrolyte membrane 21, where Li$^+$ in the electrolyte membrane 21 migrates to maintain charge balance.

[Chem. 8]

$$2H_2O + 2e^- \rightarrow 2H^- + H_2 \uparrow \quad (3)$$

$$Li^+(electrolyte) \rightarrow Li^+ \quad (4)$$

In the lithium isotope enrichment device 10D according to this modification, as described above, a potential gradient is formed in the Li-containing aqueous solution AS' by the power supply 55 applying the voltage V5. Li$^+$ as cations is thus attracted to the surface (fourth electrode 41) of the electrolyte membrane 21 by electrostatic attraction, resulting in a relatively high concentration in this vicinity. Therefore, even with a low Li$^+$ concentration in the Li-containing aqueous solution AS', Li$^+$ can sufficiently diffuse to the surface of the electrolyte membrane 21, thus preventing a decrease in the Li$^+$ mobility in the electrolyte membrane 21.

The stronger the electric field E3, the more Li$^+$ is attracted to the surface of the electrolyte membrane 21 and the higher the Li$^+$ mobility in the electrolyte membrane 21. However, when the voltage V5 is increased to strengthen the electric field E3 and reaches the voltage at which electrolysis of water occurs (+1.229 V vs. SHE, 25 °C), the reaction of Formula (3) occurs in the vicinity of the fourth electrode 41 in the Li-containing aqueous solution AS', thus generating H$_2$. Since this reaction receives electrons e$^-$, the migration of electrons e$^-$ is in the opposite direction to the reaction of Formula (1) above in the vicinity of the fourth electrode 41. When the vicinity of the fourth electrode 41, that is, the surface of the electrolyte membrane 21 on the replenishment chamber 1z side reaches the potential of H$_2$ generation, a potential is reached at which some of the transition metal ions constituting the electrolyte membrane 21 is reduced (for example, when the electrolyte membrane 21 is LLTO, Ti$^{4+}$+e$^- \rightarrow$ Ti$^{3+}$) regardless of a potential difference between both surfaces of the electrolyte membrane 21. The electrolyte membrane 21 thus exhibits electron conductivity. As a result, as described above, the energy efficiency in the Li$^+$ migration in the electrolyte membrane 21 rapidly decreases. Therefore, the voltage V5 is set less than the voltage at which water electrolysis occurs.

Even with the voltage V5 less than the voltage at which water electrolysis occurs, when the voltage V5 exceeds a certain level with respect to the voltage V3, a current flows from the fourth electrode 41 to the negative electrode of the power supply 55, that is, the fourth electrode 41 receives electrons e$^-$, causing the reaction of Formula (3) nearby to generate H$_2$. As a result, the electrolyte membrane 21 exhibits electron conductivity. Therefore, the voltage V5 is preferably greater to the extent that no current flows from the fourth electrode 41 toward the negative electrode of the power supply 55. To this end, the voltages V3 and V5 may be applied while measuring the current by connecting an ammeter in series to the fourth electrode 41 (connecting the ammeter between the connection between the power supplies 55 and 53 and the fourth electrode 41) for example.

In the lithium isotope enrichment device 10D according to this modification, the raw material chamber 1y may be open to underwater such as in the sea, through a filter or the like. The lithium isotope enrichment device 10D may include no ion exchange membrane 8, and may have the processing tank 1B partitioned into three chambers, as in the lithium isotope enrichment device 10C according to the embodiment. The replenishment chamber 1z can store seawater or the like as the Li-containing aqueous solution AS'. The application of the voltage V5 moves anions such as Cl$^-$ in the Li-containing aqueous solution AS' away from the fourth electrode 41 and the electrolyte membrane 21. Therefore, Cl$^-$

is hardly adsorbed to the surface of the electrolyte membrane 21 even without the ion exchange membrane 8, and the fourth electrode 41 is hardly deteriorated by Cl⁻, thus preventing a decrease in the Li⁺ mobility in the electrolyte membrane 21. Li⁺ in the Li-containing aqueous solution AS' is attracted to the fourth electrode 41, that is, the surface of the electrolyte membrane 21, and thus the Li⁺ mobility can be increased in the electrolyte membrane 21. Since there is no ion exchange membrane 8 between the sixth electrode 44 and the fourth electrode 41, the electric field E3 can be strengthened with respect to the voltage V5. When the ion exchange membrane 8 is not provided as described above, a LiOH aqueous solution may be stored in the replenishment chamber 1z as the Li-containing aqueous solution AS', as in the embodiment described above. Even if the Li⁺ concentration in the Li-containing aqueous solution AS' decreases with the passage of operation time, the Li⁺ mobility in the electrolyte membrane 21 hardly decreases, thus making it possible to reduce the frequency of replacing the Li-containing aqueous solution AS'. In this case, when the Li⁺ concentration in the Li-containing aqueous solution AS' decreases below a certain level, application of the voltage V5 by the power supply 55 may be started.

With the lithium isotope enrichment device 10D according to this modification, the Li-containing aqueous solution ASi can be replenished with Li⁺ from the Li-containing aqueous solution SW such as seawater. Therefore, as for the Li-containing aqueous solution ASi, pure water can be stored in the supply chamber 11 before the start of operation (isotope enrichment) of the lithium isotope enrichment device 10D, and Li⁺ can be recovered from the Li-containing aqueous solution ASi from the Li-containing aqueous solution SW through the Li-containing aqueous solution AS'. That is, the lithium isotope enrichment device 10D can be a cascade-structured lithium recovery and isotope enrichment composite device having the processing tanks of the lithium recovery device the lithium isotope enrichment device 10 integrated. In this case, the power supplies 53 and 55 are driven first to convert the Li-containing aqueous solution ASi into a LiOH aqueous solution (for example, a LiOH saturated solution) with a target Li⁺ concentration, and then the power supply unit 5 is driven to start isotope enrichment.

(Second Modification)

The lithium isotope enrichment device 10D according to the modification can be a lithium recovery and isotope enrichment composite device. However, to obtain a highly concentrated Li⁺ aqueous solution such as a LiOH saturated aqueous solution from pure water, it is necessary to move a large amount of Li⁺, and it takes time to start isotope enrichment. Therefore, the following configuration is employed to increase the Li⁺ mobility without causing the electrolyte membrane 21 to exhibit electron conductivity.

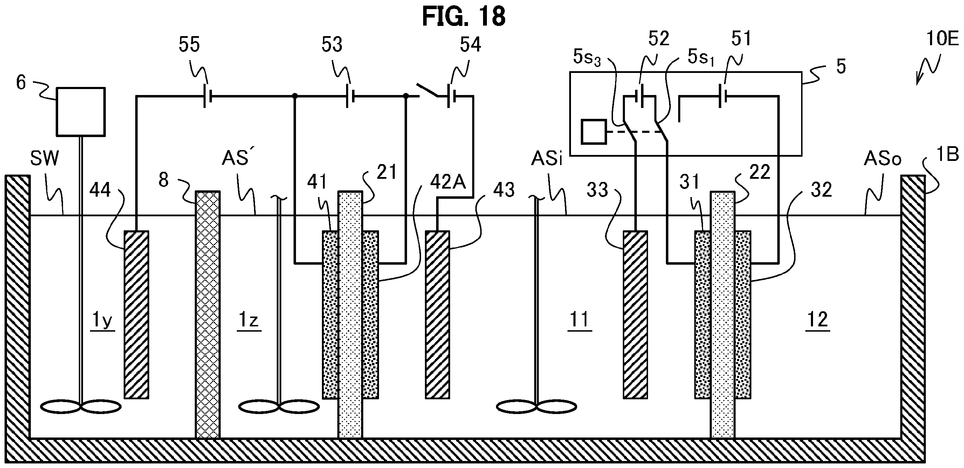

As shown in FIG. 18, a lithium isotope enrichment device 10E according to a second modification of the second embodiment of the present invention includes: a processing tank 1B; an electrolyte membrane (lithium ion-conducting electrolyte membrane for lithium replenishment) 21; an electrolyte membrane (lithium ion-conducting electrolyte membrane) 22; a first electrode (porous electrode) 31; a second electrode (porous electrode) 32; a third electrode (sub-electrode) 33; a fourth electrode (first electrode for lithium replenishment) 41; a fifth electrode (second electrode for lithium replenishment) 42A; a sub-electrode 43; a sixth electrode 44; a power supply unit 5 including a main power supply 51 and a sub-power supply 52; a power supply (lithium replenishment power supply) 53; a power supply 54; a power supply 55; an ion exchange membrane 8; and a stirring device (circulator means) 6. The processing tank 1B is partitioned by the ion exchange membrane 8 and the electrolyte membranes 21 and 22 into four chambers: a raw material chamber 1y that stores a Li-containing aqueous solution SW, a replenishment chamber (lithium replenishment chamber) 1z that stores a Li-containing aqueous solution AS', a supply chamber (first chamber) 11 that stores a Li-containing aqueous solution ASi, and a recovery chamber (second chamber) 12 that stores a ⁶Li recovery aqueous solution ASo. The lithium isotope enrichment device 10E differs from the lithium isotope enrichment device 10D according to the first modification of the second embodiment (see FIG. 16) in that the fifth electrode 42A has a porous structure and is provided in contact with the electrolyte membrane 21 as the fourth electrode 41, and further including the sub-electrode 43 provided to be separated from the electrolyte membrane 21 and the fifth electrode 42A while facing the fifth electrode 42A in the supply chamber 11, and the power supply 54 connected between the electrodes 42A and 43. The other configuration is the same as that of the lithium isotope enrichment device 10D according to the above modification. The lithium isotope enrichment device 10E may also include a cooling device 7, a liquid level sensor, exhaust means, and the like, as necessary.

The fifth electrode 42A is an electrode paired up with the fourth electrode 41 to apply a voltage between both surfaces of the electrolyte membrane 21, and also relatively increase the potential of the surface (back surface) of the electrolyte membrane 21 on the supply chamber 11 side in the Li-containing aqueous solution ASi. To this end, the fifth electrode 42A has a porous structure and is provided in contact with the surface of the electrolyte membrane 21 on the supply chamber 11 side. The fifth electrode 42A is formed of an electrode material that has electronic conductivity and is stable even when a voltage is applied in the Li-containing aqueous solution ASi, and that also preferably has catalytic activity for the reaction of Formula (1) below and the reaction of Formula (4) below. The electrode material for the fifth electrode 42A is preferably a material that can be easily processed into the shape described above. Such an electrode material for the fifth electrode 42A is preferably platinum (Pt), for example.

[Chem. 9]

$$2OH^- \rightarrow H_2O + \frac{1}{2}O_2 \uparrow + 2e^- \cdots (1)$$

$$Li^+(electrolyte) \rightarrow Li^+ \qquad \cdots (4)$$

The sub-electrode 43 is an electrode for forming a potential lower than that of the back surface of the electrolyte membrane 21 in the Li-containing aqueous solution ASi, and is paired up with the fourth electrode 41 to apply a voltage. Therefore, it is preferable that the sub-electrode 43 is disposed in the supply chamber 11 so as not to contact the electrolyte membrane 21 and the fifth electrode 42A, and is disposed parallel to and facing the fifth electrode 42A. The sub-electrode 33 is preferably disposed close to the fifth electrode 42A to the extent that it does not short-circuit, as will be described later. It is also preferable that the sub-electrode 43 has a shape such as a mesh so as to increase the contact area with the Li-containing aqueous solution ASi. The sub-electrode 43 is formed of an electrode material that has electron conductivity and is stable even when a voltage is applied in the Li-containing aqueous solution ASi, and that also preferably has catalytic activity for the reaction of Formula (3). The electrode material for the sub-electrode 43 is preferably platinum (Pt), for example. Alternatively, the sub-electrode 43 can be made of carbon (C), copper (Cu) or stainless steel, which is stable at a potential lower than the potential at which the reaction of Formula (3) below occurs. The sub-electrode 43 can be, more preferably, made of a material carrying Pt fine particles on the surface of such materials, which function as a catalyst.

[Chem. 10]

$$2H_2O + 2e^- \rightarrow 2H^- + H_2 \uparrow \qquad (3)$$

The power supply 54 is a DC power supply, as with the power supply 53, and has a positive electrode connected to the fifth electrode 42A and a negative electrode connected to the sub-electrode 43. That is, the power supply 54 is connected in series to the negative electrode of the power supply 53. The power supply 54 applies a voltage V4 to form a potential lower than that of the back surface of the electrolyte membrane 21 in the Li-containing aqueous solution ASi, thus preventing the electrolyte membrane 21 from exhibiting electronic conductivity.

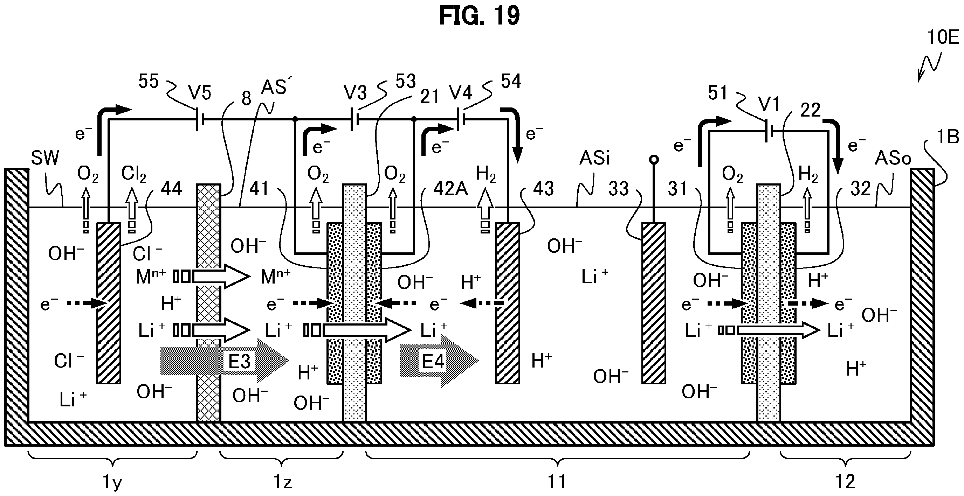

A lithium isotope enrichment method using the lithium isotope enrichment device according to the second modification of the second embodiment of the present invention will be described with reference to FIG. 19. In the lithium isotope enrichment device 10E according to this modification, the replenishment chamber 1z and the supply chamber 11 store pure water as the Li-containing aqueous solutions AS' and ASi. As in the lithium isotope enrichment device 10D according to the first modification (see FIG. 17), the power supply 55 is first driven to move cations including $Li^+$ from the Li-containing aqueous solution SW accommodated in the raw material chamber 1y. Once the concentration of $Li^+$ in the Li-containing aqueous solution AS' reaches a certain level, it is preferable to further start driving the power supplies 53 and 54. Hereinafter, the $Li^+$ migration from the Li-containing aqueous solution AS' in the replenishment chamber 1z to the Li-containing aqueous solution ASi in the supply chamber 11 will be described. FIG. 19 omits the stirring device 6.

In the lithium isotope enrichment device 10E, the power supply 55, power supply 53, and power supply 54 connected in series can be considered as one power supply (referred to as the power supply 55-53-54). Similarly, the power supply 53 and the power supply 54 can be considered as one power supply (referred to as the power supply 53-54). The power supply 55-53-54 applies a positive voltage (V5+V3+V4), with respect to the sub-electrode 43, to the sixth electrode 44. At the same time, the power supply 53-54 applies a positive voltage (V3+V4), with respect to the sub-electrode 43, to the fourth electrode 41. Then, in the raw material chamber 1y and the replenishment chamber 1z, as in the case of the lithium isotope enrichment device 10D, the reaction of Formula (1) below occurs near the sixth electrode 44 and the fourth electrode 41, and the reaction of Formula (12) below occurs near the sixth electrode 44. Accordingly, the reaction of Formula (2) below occurs near the fourth electrode 41, where $Li^+$ in the Li-containing aqueous solution AS' migrates into the electrolyte membrane 21.

[Chem. 11]

$$2OH^- \rightarrow H_2O + \frac{1}{2}O_2 \uparrow +2e^- \cdots (1)$$

$$2Cl^- \rightarrow Cl_2 \uparrow +2e^- \qquad \cdots (12)$$

$$Li^+ \rightarrow Li^+(electrolyte) \qquad \cdots (2)$$

On the other hand, the following reaction occurs in the supply chamber 11. In the vicinity of the sub-electrode 43, the application of the voltage (V3+V4) by the power supply 53-54 supplies $H_2O$ in the Li-containing aqueous solution ASi with electrons $e^-$, thus causing the reaction of Formula (3) below to generate $H_2$ and $OH^-$. Then, since $H^+$ decreases near the sub-electrode 43, the reaction of Formula (4) below occurs, where $Li^+$ in the electrolyte membrane 21 migrates to the Li-containing aqueous solution ASi, on the back surface of the electrolyte membrane 21, that is, near the fifth electrode 42A. At the same time, the power supply 54 applies a positive voltage V4 of a predetermined magnitude based on the voltages V3 and V5, with respect to the sub-electrode 43, to the fifth electrode 42A. Then, in the vicinity of the fifth electrode 42A, $OH^-$ in the Li-containing aqueous solution ASi causes the reaction of Formula (1) below, releasing electrons $e^-$ to the fifth electrode 42A to generate $H_2O$ and $O_2$. As a result, in the vicinity of the fifth electrode 42A, excess cations due to the reaction of Formula (1) below and the reaction of Formula (4) below cause charge imbalance. However, to compensate for the lack of cations near the sub-electrode 43 due to the reaction of Formula (3) below, and along the electric field E4 generated by the application of the voltage V4, $Li^+$ quickly migrates to the vicinity of the sub-electrode 43 from the vicinity of the fifth electrode 42A. As a result, the charge imbalance in the Li-containing aqueous solution ASi is eliminated. The relative relationship in magnitude between the voltage V3 and the voltage V4 will be described later.

[Chem. 12]

$$2H_2O + 2e^- \rightarrow 2OH^- + H_2 \uparrow \cdots (3)$$

$$Li^+(electrolyte) \rightarrow Li^+ \qquad \cdots (4)$$

$$2OH^- \rightarrow H_2O + \frac{1}{2}O_2 \uparrow +2e^- \cdots (1)$$

In the lithium isotope enrichment device 10E according to this modification, the effect of applying the voltage V5 is the same as that of the lithium isotope enrichment device 10D according to the first modification. In this modification, the application of the voltage V4 also causes an appropriate potential difference in the Li-containing aqueous solution ASi with the fifth electrode 42A being positive. Then, the electrons $e^-$ supplied from the sub-electrode 43 to the Li-containing aqueous solution ASi migrate from the fifth electrode 42A on the back surface of the electrolyte membrane 21 to the positive electrode of the power supply 54, thus maintaining the potential of the fifth electrode 42A as high as about the $O_2$ generation potential. Since the $O_2$ generation potential is higher than the reduction potential of transition metal ions constituting the electrolyte membrane 21, the electrolyte membrane 21 does not conduct electrons $e^-$ regardless of the potential difference between both surfaces. Therefore, the voltage V3 can be set to a voltage greater than or equal to the applied voltage that causes the electrolyte membrane 21 to reach the reduction potential of at least one type of transition metal ion constituting the electrolyte membrane 21. In other words, when such a large voltage V3 is applied without applying the voltage V4, electrons $e^-$ are taken in from the surface of the electrolyte membrane 21 on the negative electrode side (supply chamber 11 side), resulting in reduction of the transition metal ions. However, in this modification, as described above, the application of the voltage V4 prevents the electrolyte membrane 21 from reaching the reduction potential of transition metal ions, and the electrolyte membrane 21 does not conduct electrons $e^-$.

When the voltage V4 is not large enough with respect to the voltage V3, a current flows from the fifth electrode 42A to the negative electrode of the power supply 53. That is, the fifth electrode 42A receives electrons $e^-$ and causes the reaction of Formula (3) nearby to generate $H_2$. As a result, the electrolyte membrane 21 exhibits electron conductivity. Therefore, the voltage V4 is set to a magnitude that does not cause a current to flow from the fifth electrode 42A toward the negative electrode of the power supply 53. Such a voltage V4 can be reduced as the resistance between the fifth electrode 42A and the sub-electrode 43 (resistance of the Li-containing aqueous solution ASi) is low. Therefore, it is preferable that the distance between the fifth electrode 42A (electrolyte membrane 21) and the sub-electrode 43 is short. However, as the voltage V4 becomes larger within such a magnitude range, the current flowing from the power supply 54 to the fifth electrode 42A increases. This causes $O_2$ generation (reaction of Formula (1)) near the fifth electrode 42A

and $H_2$ generation (reaction of Formula (3)) near the sub-electrode 43 to increase more than the increase in the migration amount of $Li^+$, resulting in reduced energy efficiency. To prevent this, the voltage V4 may be applied while measuring the current by connecting an ammeter in series to the fifth electrode 42A (connecting the ammeter between the connection between the power supplies 53 and 54 and the fifth electrode 42A), for example.

Once the Li-containing aqueous solution ASi turns into a saturated LiOH aqueous solution, for example, with a target $Li^+$ concentration, the power supply unit 5 is driven to start isotope enrichment. As described in the above embodiment, the migration amount for a certain period of time can be increased in the Li+ migration in the electrolyte membrane 21 due to continuous energization of the power supply 53, compared to the $Li^+$ migration in the electrolyte membrane 22 due to intermittent energization of the main power supply 51. Therefore, after the start of isotope enrichment, the power supply 54 can be stopped by lowering the voltage V3 and further lowering the voltage V5 if necessary (see FIGs. 18 and 17).

The lithium isotope enrichment devices 10C, 10D, and 10E according to the second embodiment and its modifications can also be configured to be coupled to the supply chamber 11 of the lithium isotope enrichment device 10B according to the modification of the first embodiment (see FIG. 8). Similarly, the lithium isotope enrichment devices 10C, 10D, and 10E can also be configured to be coupled to the supply chamber 11 of the multi-stage lithium isotope enrichment devices 20, 20A, and 20B (see FIGs. 10, 11A, 11B, and 12).

**EXAMPLE**

The lithium isotope enrichment device and the lithium isotope enrichment method according to the present invention have been described above based on the embodiments of the present invention. Hereinafter, examples in which the effects of the present invention have been confirmed will be described. It should be noted that the present invention is not limited to these examples and the above embodiments. It goes without saying that various changes and modifications based on these descriptions are also included in the spirit of the present invention.

With the lithium isotope enrichment device according to the embodiment of the present invention and its modification shown in FIGs. 1 and 8, the amount of change in lithium isotope ratio is measured by changing the voltage application conditions.

(Preparation of Lithium Isotope Enrichment Device)

The lithium isotope enrichment device uses a 50 mm×50 mm, 0.5 mm thick plate-like $La_{0.57}Li_{0.29}TiO_3$ (lithium-ion conducting ceramic LLTO, produced by TOHO TITANIUM CO., LTD.) as an electrolyte membrane. In regions of 19.5 mm×20.5 mm in center portions of the respective surfaces of this electrolyte membrane, lattice-shaped electrodes each having a thickness of 10 $\mu$m, a width of 0.5 mm, and an interval of 0.5 mm are formed as a first electrode and a second electrode (porous electrodes). Moreover, leads for connecting the electrodes and the power supply are formed. The first electrode, the second electrode, and the leads are formed by screen-printing a Pt paste on the surfaces of the electrolyte membrane, followed by baking at 900 °C for 1 h in the atmosphere. A 20 mm×20 mm Pt mesh electrode is used as a third electrode (sub-electrode). The electrolyte membrane on which the electrodes and the like are formed is set in a processing tank formed of acrylic plates to partition the processing tank into a supply chamber and a recovery chamber, and the third electrode is disposed so as to face the first electrode on the surface of the electrolyte membrane (distance between the third electrode and the electrolyte membrane: 50 mm). The processing tank is accommodated in a constant-temperature tank having a temperature adjustment function. Then, the main power supply is connected between the first and second electrodes with the first electrode as the positive electrode, and the sub-power supply is connected between the third electrode and the first electrode, thus obtaining the lithium isotope enrichment device.

150 ml of 1 mol/l lithium hydroxide aqueous solution containing 92.23 mol% of $^7Li$ and 7.77 mol% of $^6Li$ is fed as a Li-containing aqueous solution into the supply chamber of the lithium isotope enrichment device and 150 ml of pure water is fed as a $^6Li$ recovery aqueous solution into the recovery chamber thereof, such that the first electrode, the second electrode, and the third electrode are completely immersed. Then, the solution temperatures of the lithium hydroxide aqueous solution and pure water in the processing tank are adjusted to 20 °C.

(Lithium Isotope Enrichment Experiment)

The voltage V1 applied between the first electrode and the second electrode by the main power source is set to 2.0 V, at which the LLTO (electrolyte membrane) exhibits Li+ conductivity and no or sufficiently low electron conductivity. The voltage V2 applied between the third electrode and the first electrode by the sub-power supply is set to 1.0 V (equivalent to 200 V/m). As Example 1, the application of voltage +V1 (the first electrode is the positive electrode of the main power supply) for 1.0 seconds and the application of voltage -V2 (the third electrode is the negative electrode of the sub-power supply) for 0.5 seconds are repeated alternately with a 0.5 second no-application period in between (see FIG. 2 and Table 1) . As Example 2, the application of voltage +V1 for 1.0 seconds, the application of voltage -V2 for 0.5 seconds, and the application of voltage +V2 (the third electrode is the positive electrode of the sub-power supply) for 0.5 seconds are repeated in this order with a 0.5 second no-application period before and after the application of the voltage +V1 (see FIG. 9 and Table 1) . As Comparative Example 1, the application of voltage +V1 for 1.0 seconds and application stop for 1.5 seconds are alternately repeated. Example 1, Example 2, and Comparative Example 1 are performed for a cumulative application time of 3600 seconds for the voltage +V1. As Comparative Example 2, continuous energization is performed at the voltage +V1 for 1 hour (3600 seconds). The aqueous solutions in the supply chamber and the recovery chamber are each stirred during the voltage application. Table 1 shows the voltages V1 and V2, voltage application cycles, and operation times. In the voltage application cycles in Table 1, the application time is shown in parentheses, and only the time represents the non-application period.

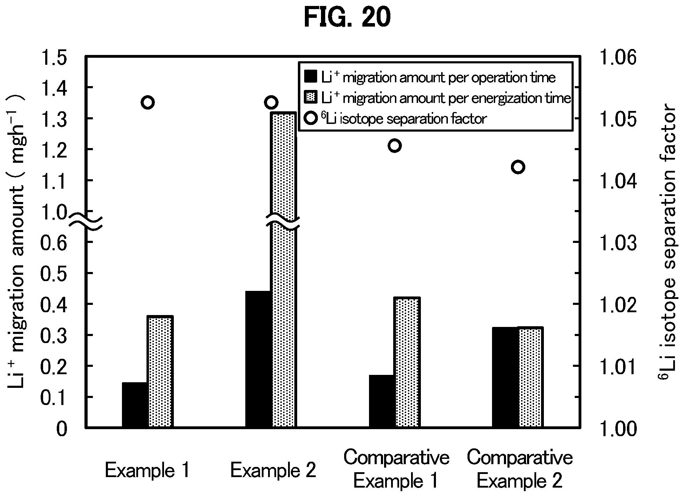

After the experiment, the aqueous solution in the recovery chamber is recovered, and the amounts of $^7$Li and $^6$Li in the aqueous solution are measured using an inductively coupled plasma mass spectrometry (ICP-MS) device (Elan drc-e, manufactured by PerkinElmer, Inc.). From the amounts of $^7$Li and $^6$Li, the Li$^+$ migration amount per hour of cumulative application time of voltage +V1 (total amount of $^7$Li and $^6$Li), the Li$^+$ migration amount per hour of operation time, and the $^6$Li isotope separation factor are calculated. The $^6$Li isotope separation factor is (($^6$Li/$^7$Li) molar ratio of the aqueous solution in the recovery chamber after voltage application)/(($^6$Li/$^7$Li) molar ratio of the lithium hydroxide aqueous solution in the supply chamber before voltage application). Table 1 and FIG. 20 show the Li$^+$ migration amount (Li$^+$ migration amount per voltage +V1 application time (energization time), Li$^+$ mobility), Li$^+$ migration amount per operation time, and $^6$Li isotope separation factor.

[Table 1]

| | V1 (V) | V2 (V) | Voltage Application Cycle | Operation Time (h) | Li migration amount (mg) | Li migration amount (mg/h) | $^6$Li isotope separation factor |
|---|---|---|---|---|---|---|---|
| Example 1 | 2.0 | 1.0 | +V1(1.0s)→(0.5s) → -V2(0.5s)→ (0.5s) | 2.5 | 0.3592 | 0.1437 | 1.0525 |
| Example 2 | 2.0 | 1.0 | +V1(1.0s)→(0.5s) → -V2(0.5s)-+V2(0.5s)→ (0.5s) | 3.0 | 1.317 | 0.4390 | 1.0525 |
| Comparative Example 1 | 2.0 | - | +V1(1.0s)→(1.5s) | 2.5 | 0.4194 | 0.1678 | 1.0456 |
| Comparative Example 2 | 2.0 | - | +V1(3600s) | 1.0 | 0.3228 | 0.3228 | 1.0421 |

As shown in Table 1 and FIG. 20, compared to Comparative Example 2 with continuous energization, Example 1, Example 2, and Comparative Example 1 with intermittent application of the voltage +V1 between both surfaces of the electrolyte membrane all show high $^6$Li isotope separation factor. Furthermore, Examples 1 and Example 2 where the voltage -V2 is applied between the third electrode and the first electrode in the Li-containing aqueous solution in the supply chamber during the application stop of the voltage +V1 show higher $^6$Li isotope separation factor than Comparative Example 1 with no application. From this result, it can be said that the application of a negative voltage to the third electrode spaced apart from the surface of the electrolyte membrane in the Li-containing aqueous solution makes it easier for Li$^+$ adsorbed on the surface of the electrolyte membrane to be desorbed, thus enabling further improvement in $^6$Li enrichment effect by intermittent application of voltage +V1. In addition, in Example 2 where the voltage +V2 is further applied after the voltage -V2 is applied during application stop of the voltage +V1, the Li$^+$ mobility is significantly higher, about 3.7 times that of Example 1, and the Li$^+$ migration amount per operation time is also about three times higher. From this result, it can be said that the application of the voltage +V2 can resolve a decrease in Li$^+$ mobility caused by the application of the voltage -V2 immediately after the application of the voltage +V1 is resumed, or even further improve the Li$^+$ mobility, thus increasing both time efficiency and energy efficiency.

**Reference Signs List**

    10, 10B, 10C, 10D, 10E lithium isotope enrichment device

20, 20A, 20B multi-stage lithium isotope enrichment device
1, 1A, 1B processing tank
11 supply chamber (first chamber)
12 recovery chamber (second chamber)
1z replenishment chamber
2 electrolyte membrane (lithium ion-conducting electrolyte membrane)
21 electrolyte membrane (lithium ion-conducting electrolyte membrane for lithium replenishment)
22, 23, 24, 25, 26, 27 electrolyte membrane (lithium ion-conducting electrolyte membrane)
31 first electrode (porous electrode)
32 second electrode (porous electrode)
33 third electrode (sub-electrode)
50, 50C power supply unit
5, 5A, 5B power supply unit
51 main power supply
51A variable power supply
52, 52B sub-power supply
53 power supply (lithium replenishment power supply)
6 stirring device (circulator)
7 cooling device
ASi Li-containing aqueous solution
ASo $^6$Li recovery aqueous solution

**Claims**

1.  A lithium isotope enrichment device which includes a processing tank partitioned into a first chamber and a second chamber, and is configured to recover in the second chamber from an aqueous solution containing lithium ions of $^6$Li and $^7$Li stored in the first chamber, an aqueous solution containing lithium ions having a higher isotope ratio of $^6$Li than the aqueous solution in the first chamber, comprising:

    a lithium ion-conducting electrolyte membrane that partitions the processing tank;
    porous electrodes provided in contact with each of both surfaces of the lithium ion-conducting electrolyte membrane respectively;
    a sub-electrode provided in the first chamber and apart from a surface of the lithium ion-conducting electrolyte membrane closer to the first chamber and a porous electrode in the first chamber; and
    a power supply unit configured to apply a voltage alternately between the porous electrodes and between the porous electrode in the first chamber and the sub-electrode, with the porous electrode in the first chamber being positive.

2.  The lithium isotope enrichment device, according to claim 1, wherein the power supply unit is configured to a voltage between the porous electrodes after applying a voltage between the porous electrode in the first chamber and the sub-electrode, with the porous electrode in the first chamber being positive, and then applying a voltage with the sub-electrode being positive.

3.  The lithium isotope enrichment device, according to claim 1 or 2, wherein the power supply unit includes a main power supply connected between the porous electrodes with the porous electrode in the first chamber as a positive electrode, and a sub-power supply connected between the porous electrode in the first chamber and the sub-electrode.

4.  The lithium isotope enrichment device, according to claim 1 or 2, further comprising:
    a circulator for circulating the aqueous solution contained in the first chamber.

5.  The lithium isotope enrichment device, according to claim 1 or 2, wherein the processing tank is partitioned into a lithium replenishment chamber, the first chamber, and the second chamber in this order,
    the device further comprising:

    a lithium ion-conducting electrolyte membrane for lithium replenishment that partitions the lithium replenishment chamber and the first chamber;

a first electrode for lithium replenishment provided in the lithium replenishment chamber;
a second electrode for lithium replenishment provided in the first chamber in contact with or facing the lithium ion-conducting electrolyte membrane for lithium replenishment; and
a lithium replenishment power supply connected between the first electrode for lithium replenishment and the second electrode for lithium replenishment, with the first electrode for lithium replenishment as a positive electrode, wherein
lithium ions are made to migrate from the aqueous solution containing lithium ions of $^6$Li and $^7$Li stored in the lithium replenishment chamber to the aqueous solution stored in the first chamber.

6. The lithium isotope enrichment device, according to claim 1 or 2, further comprising:
a cooling device for cooling the lithium ion-conducting electrolyte membrane.

7. Amulti-stage lithium isotope enrichment device comprising more than or equal to two of lithium isotope enrichment devices according to claim 1 or 2 coupled so that processing tanks are integrated together, wherein

respective lithium ion-conducting electrolyte membranes of the lithium isotope enrichment devices are disposed spaced apart from each other so as to partition an integrated processing tank into more than or equal to three chambers, and
the second chamber of one of two neighboring lithium isotope enrichment devices also serves as the first chamber of the other one.

8. The multi-stage lithium isotope enrichment device, according to claim 7, wherein the power supply units of two neighboring lithium isotope enrichment devices keep from simultaneously applying a voltage between the porous electrodes.

9. The multi-stage lithium isotope enrichment device, according to claim 8, wherein a porous electrode in the second chamber of one of two neighboring lithium isotope enrichment devices also serves as the sub-electrode of the other one.

10. The multi-stage lithium isotope enrichment device, according to claim 9, further comprising:

a circulator for circulating an aqueous solution stored in at least one chamber of the partitioned processing tank, wherein the sub-electrode is provided in the chamber storing the aqueous solution circulated by the circulator and apart from the lithium ion-conducting electrolyte membrane.

11. The multi-stage lithium isotope enrichment device, according to claim 7, further comprising:

a lithium ion-conducting electrolyte membrane for lithium replenishment, which further partitions the partitioned processing tank so as to provide a lithium replenishment chamber at an end closer to the first chamber of the processing tank;
a first electrode for lithium replenishment provided in the lithium replenishment chamber;
a second electrode for lithium replenishment provided in contact with or facing the lithium ion-conducting electrolyte membrane for lithium replenishment in the first chamber neighboring to the lithium replenishment chamber; and
a lithium replenishment power supply connected between the first electrode for lithium replenishment and the second electrode for lithium replenishment, with the first electrode for lithium replenishment as a positive electrode, wherein
lithium ions are made to migrate from the aqueous solution containing lithium ions of $^6$Li and $^7$Li stored in the lithium replenishment chamber to the aqueous solution stored in the first chamber neighboring to the lithium replenishment chamber.

12. The multi-stage lithium isotope enrichment device, according to claim 7, further comprising:
a cooling device for cooling the aqueous solution stored in at least one chamber of the partitioned processing tank.

13. A lithium isotope enrichment method for recovering, in a processing tank partitioned into a first chamber and a second chamber by a lithium ion-conducting electrolyte membrane, in the second chamber from an aqueous solution containing lithium ions of $^6$Li and $^7$Li stored in the first chamber, an aqueous solution containing lithium ions having a higher isotope ratio of $^6$Li than the aqueous solution in the first chamber, comprising:

alternately performing

a first step of applying a positive voltage, with respect to a porous electrode in the second chamber, to a porous electrode in the first chamber of porous electrodes which are provided in contact with both surfaces of the lithium ion-conducting electrolyte membrane respectively and

a second step of applying a negative voltage, with respect to the porous electrode in the first chamber, to a sub-electrode provided in the first chamber and apart from a surface of the lithium ion-conducting electrolyte membrane closer to the first chamber and the porous electrode in the first chamber.

**14.** The lithium isotope enrichment method, according to claim 13, further performing:

a third step of applying a positive voltage, with respect to the porous electrode in the first chamber, to the sub-electrode, wherein

the first step, the second step, and the third step are repeated in this order.

# FIG. 1

# FIG. 2

# FIG. 3

# FIG. 4

# FIG. 5A

# FIG. 5B

## FIG. 5C

## FIG. 5D

# FIG. 6

# FIG. 7

# FIG. 8

# FIG. 9

FIG. 10

**FIG. 11A**

# FIG. 11B

EP 4 374 953 A1

**FIG. 12**

EP 4 374 953 A1

FIG. 13A

**FIG. 13B**

**FIG. 13C**

EP 4 374 953 A1

# FIG. 14

# FIG. 15

# FIG. 16

EP 4 374 953 A1

# FIG. 17

EP 4 374 953 A1

FIG. 18

EP 4 374 953 A1

# FIG. 19

EP 4 374 953 A1

FIG. 20

## INTERNATIONAL SEARCH REPORT

| International application No. |
| --- |
| **PCT/JP2022/028416** |

**A.  CLASSIFICATION OF SUBJECT MATTER**

*B01D 59/38*(2006.01)i; *C25B 1/16*(2006.01)i; *C25B 9/00*(2021.01)i; *C25B 9/23*(2021.01)i; *C25B 9/70*(2021.01)i
FI:   B01D59/38; C25B1/16; C25B9/00 Z; C25B9/23; C25B9/70

According to International Patent Classification (IPC) or to both national classification and IPC

**B.  FIELDS SEARCHED**

Minimum documentation searched (classification system followed by classification symbols)

B01D59/38; C25B1/16; C25B9/00; C25B9/23; C25B9/70

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JSTChina/JST7580 (JDreamIII)

**C.  DOCUMENTS CONSIDERED TO BE RELEVANT**

| Category* | Citation of document, with indication, where appropriate, of the relevant passages | Relevant to claim No. |
| --- | --- | --- |
| A | JP 2019-141808 A (UNIV HIROSAKI) 29 August 2019 (2019-08-29) entire text | 1-14 |
| A | JP 2019-141807 A (UNIV HIROSAKI) 29 August 2019 (2019-08-29) entire text | 1-14 |
| A | CN 112473370 A (TIANQI LITHIUM CORP) 12 March 2021 (2021-03-12) entire text | 1-14 |
| A | JP 2002-79059 A (JAPAN ATOM ENERGY RESEARCH INSTITUTE) 19 March 2002 (2002-03-19) entire text | 1-14 |

☐ Further documents are listed in the continuation of Box C.          ☑ See patent family annex.

| *    Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **12 August 2022** | **30 August 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/028416**

| Patent document cited in search report | | | Publication date (day/month/year) | Patent family member(s) | Publication date (day/month/year) |
|---|---|---|---|---|---|
| JP | 2019-141808 | A | 29 August 2019 | (Family: none) | |
| JP | 2019-141807 | A | 29 August 2019 | (Family: none) | |
| CN | 112473370 | A | 12 March 2021 | (Family: none) | |
| JP | 2002-79059 | A | 19 March 2002 | EP 1186337 A2 entire text | |

Form PCT/ISA/210 (patent family annex) (January 2015)

## REFERENCES CITED IN THE DESCRIPTION

**Patent documents cited in the description**

- JP 5429658 B
- JP 6233877 B
- JP 2019141807 A
- JP 2019141808 A

**Non-patent literature cited in the description**

- **SHUNSUKE HONDA ; KIYOTO SHIN-MURA ; KA-ZUYA SASAKI.** Lithium isotope enrichment by electrochemical pumping using solid lithium electrolytes. *Journal of the Ceramic Society of Japan,* May 2018, vol. 126 (5), 331-335